(19) **Europäisches Patentamt**
**European Patent Office**
**Office européen des brevets**

(11) **EP 4 773 710 A1**

(12) **EUROPEAN PATENT APPLICATION**
published in accordance with Art. 153(4) EPC

(43) Date of publication:
08.07.2026 Bulletin 2026/28

(21) Application number: 24905518.7

(22) Date of filing: 23.07.2024

(51) International Patent Classification (IPC):
*H04W 72/566* (2023.01)

(52) Cooperative Patent Classification (CPC):
H04W 72/566

(86) International application number:
PCT/CN2024/106945

(87) International publication number:
WO 2025/130020 (26.06.2025 Gazette 2025/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.12.2023 CN 202311751405

(71) Applicant: Honor Device Co., Ltd.
Shenzhen, Guangdong 518040 (CN)

(72) Inventor: ZHANG, Mingzhu
Shenzhen, Guangdong 518040 (CN)

(74) Representative: Goddar, Heinz J.
Boehmert & Boehmert
Anwaltspartnerschaft mbB
Pettenkoferstrasse 22
80336 München (DE)

(54) **COMMUNICATION METHOD AND DEVICE**

(57) This application provides a communication method and a related device. The method includes: obtaining a sorting result or a priority of a data transmission object based on a remaining duration of the data transmission object; and transmitting data in the data transmission object or allocating a resource to the data transmission object based on the sorting result or the priority of the data transmission object. According to the method, the remaining duration of the data transmission object is considered, the sorting result or the priority of the data transmission object is obtained based on the remaining duration of the data transmission object, and the resource is allocated to the data transmission object or the data in the data transmission object is transmitted based on the sorting result or the priority of the data transmission object. This ensures that data that needs to be urgently scheduled can be preferentially sent, thereby satisfying a service requirement and improving service experience.

FIG. 10

**Description**

This application claims priority to Chinese Patent Application No. 202311751405.4, filed with the China National Intellectual Property Administration on December 18, 2023 and entitled "COMMUNICATION METHOD AND DEVICE", which is incorporated herein by reference in its entirety.

**TECHNICAL FIELD**

This application relates to the field of communication technologies, and in particular, to a communication method, an electronic device, a communication system, and a computer-readable storage medium.

**BACKGROUND**

With development of mobile communication technologies, and in particular, continuous development of a new generation of mobile communication technologies such as the fifth generation mobile communication technology (the fifth generation mobile networks, 5G for short), functions of a communication system are continuously enhanced. Specifically, a 5G communication system may provide an enhanced mobile bandwidth (enhanced Mobile Broadband, eMBB), have a faster connection, higher throughput, and a larger capacity, and provide ultra-reliable low-latency communications (ultra-reliable low-latency communications, uRLLC), to apply a network to a critical task scenario in which an uninterrupted and stable data link is needed, for example, an extended reality (eXtended Reality, XR) scenario or a cloud gaming (Cloud Gaming) scenario, thereby satisfying requirements of the scenario for ultra-high reliability and low latency of a wireless communication network.

The communication system may include a network device like a base station. Each base station supports communication between a plurality of terminals. The terminal may be user equipment (user equipment, UE). In many task scenarios, the UE usually needs to upload data to the network device. The UE usually includes a plurality of logical channels, and the UE may map the logical channel to an uplink grant (uplink grant, UL grant) according to a specific rule. For example, if a sub-carrier spacing (sub-carrier space, SCS) associated with the logical channel is the same as an SCS of the uplink grant, the logical channel may be mapped to the uplink grant, in other words, data in the logical channel may be transmitted on the uplink grant.

The logical channel mapped to the uplink grant is usually filled into a corresponding resource for transmission based on logical channel prioritization (Logical Channel Prioritization, LCP) configured on a network side. As a result, some data packets that need to be urgently scheduled are not sent in time, affecting service experience.

**SUMMARY**

This application provides a communication method and a related device, to resolve a problem that in an LCP process, data is filled into a resource based on a priority configured on a network side, which results in that a data packet that needs to be urgently scheduled cannot be sent in time, affecting service experience.

To achieve the foregoing objective, this application provides the following technical solutions.

A first aspect of this application provides a communication method. The method may be applied to a communication system, and is performed by a second device in the communication system. The second device may be a device that accesses a network, and generally, may be a terminal, for example, user equipment (user equipment, UE), a mobile console, or a mobile station.

During specific implementation, the second device may obtain a sorting result or a priority of a data transmission object based on a remaining duration of the data transmission object. The data transmission object is an object used for data transmission, for example, is a logical channel. Then, the second device may transmit data in the data transmission object or allocate a resource to the data transmission object based on the sorting result or the priority of the data transmission object.

According to the method, the remaining duration of the data transmission object is considered, the sorting result or the priority of the data transmission object is obtained based on the remaining duration of the data transmission object, and the resource is allocated to the data transmission object or the data in the data transmission object is transmitted based on the sorting result or the priority of the data transmission object. This ensures that data that needs to be urgently scheduled can be preferentially sent, thereby satisfying a service requirement and improving service experience.

In some possible implementations, the second device may further obtain a first priority of the data transmission object. The first priority may be a priority configured on a network side, for example, a priority configured on the network side based on service importance or a quality of service latency requirement. Correspondingly, when obtaining the priority of the data transmission object based on the remaining duration of the data transmission object, the second device may determine a second priority of the data transmission object based on the remaining duration and the first priority of the data transmission object. The second priority is a priority obtained through adjustment based on the remaining duration of the data transmission object, in other words, the second priority is a priority determined by considering latency information.

According to the method, the priority is adjusted with reference to the latency information like the remaining duration, so that a more accurate priority can be obtained. Resource scheduling or data transmission is performed based on the priority, so that proper resource allocation can be implemented. This ensures that the data that needs to be urgently scheduled can be sent in time.

In some possible implementations, when determining the second priority of the data transmission object based on the remaining duration and the first priority of the data transmission object, the second device may adjust the first priority of the data transmission object based on an adjustment parameter, to obtain the second priority of the data transmission object.

The adjustment parameter may be a fixed value configured on the network side, for example, a first value. In some examples, the adjustment parameter may be a variable value related to the remaining duration. For example, information like an adjustment coefficient may be configured on the network side, and the second device may determine the adjustment parameter based on the information like the adjustment coefficient configured on the network side and the remaining duration.

In the method, when the first priority of the data transmission object needs to be adjusted, the adjustment may be performed by using a uniform paradigm, which has high availability and is applicable to a plurality of scenarios.

In some possible implementations, different remaining durations may correspond to different priority adjustment amplitudes. Therefore, the second device may determine the adjustment parameter based on the remaining duration and a mapping relationship between the adjustment parameter and the remaining duration, and then adjust the first priority based on the adjustment parameter, to obtain the second priority.

In this way, the priority of the data transmission object may be finely adjusted based on different remaining durations. A priority obtained in this way is of larger reference value. Resource allocation or data transmission is performed based on the priority, so that the data that needs to be urgently scheduled can be preferentially sent based on different degrees of urgency, thereby satisfying the service requirement.

In some possible implementations, there may be a plurality of policies when the first priority of the data transmission object is adjusted based on the adjustment parameter to obtain the second priority of the data transmission object. A policy is to perform priority adjustment on some data transmission objects, for example, data transmission objects whose remaining durations satisfy a condition, and not perform priority adjustment on other data transmission objects. Another policy is to perform priority adjustment on a data transmission object with any remaining duration in a unified adjustment manner. Still another policy is to distinguish data transmission objects with different remaining durations, and perform priority adjustment on the data transmission objects with the different remaining durations by using different adjustment parameters or different values of an adjustment parameter of a same type. Implementations corresponding to the foregoing policies are described below.

For the first type of policy, when the remaining duration of the data transmission object satisfies a first condition, the first priority of the data transmission object is adjusted based on a first value or an adjustment parameter related to the remaining duration, to obtain the second priority of the data transmission object. The first condition may be set based on experience, for example, may be set as that the remaining duration is less than a first threshold, or may be set as that the remaining duration is greater than a first threshold. A correlation function between the first value or the remaining duration and the adjustment parameter may vary with different first conditions. For example, the remaining duration is less than the first threshold, and the first value may be less than 1, or the remaining duration is greater than the first threshold, and the first value may be greater than 1.

For the second type of policy, the first priority of the data transmission object is adjusted based on an adjustment parameter related to the remaining duration, to obtain the second priority of the data transmission object. In this way, priority adjustment can be performed on data transmission objects with different remaining durations in a unified adjustment manner.

For the third type of policy, when the remaining duration of the data transmission object satisfies a first condition, the first priority is adjusted based on a first value or a first adjustment parameter related to the remaining duration, to obtain the second priority of the data transmission object, and when the remaining duration of the data transmission object satisfies a second condition, the first priority is adjusted based on a second value or a second adjustment parameter related to the remaining duration, to obtain the second priority of the data transmission object. The first condition and the second condition may be set based on experience. For example, the first condition may be set as that the remaining duration is less than a first threshold, and the second condition may be set as that the remaining duration is greater than the first threshold. It should be noted that the second condition may alternatively be set as that the remaining duration is greater than a second threshold. The implementation may include a plurality of cases: Case 1: When the remaining duration satisfies the first condition, priority adjustment is performed based on the first value, and when the remaining duration satisfies the second condition, priority adjustment is performed based on the second value. Case 2: When the remaining duration satisfies the first condition, priority adjustment is performed based on the first adjustment parameter related to the remaining duration, and when the remaining duration satisfies the second condition, priority adjustment is performed based on the second adjustment parameter related to the remaining duration. Case 3: When the remaining duration satisfies the first condition, priority adjustment is performed based on the first value, and when the remaining duration satisfies the second condition, priority adjustment is performed based on the second adjustment parameter related to the remaining duration. Case 4: When the remaining duration satisfies the first condition, priority adjustment is performed based on the first adjustment parameter related to the remaining duration, and when the remaining duration satisfies the second condition, priority adjustment is performed based on the second value.

The method supports performing priority adjustment in diversified manners, can satisfy different service requirements, and has high availability.

In some possible implementations, when priority adjustment is performed, an arithmetic operation may be performed on the first priority based on the adjustment parameter, to obtain the second priority of the data transmission object. The arithmetic operation refers to calculation rules of addition, subtraction, multiplication, and division, and is an operation for combining a plurality of numbers into one number.

The method performs priority adjustment by using the simple arithmetic operation, does not need complex calculation, has a low requirement on device calculation power, and is applicable to most devices.

In some possible implementations, the remaining duration not only may be used to obtain the priority of the data transmission object, but also may be used to sort the data transmission object. The data transmission object is sorted in a plurality of manners, which are separately described in detail below.

A sorting manner is: obtaining the priority of the data transmission object based on the remaining duration of the data transmission object, and sorting the data transmission object based on the priority of the data transmission object, to obtain the sorting result of the data transmission object.

Another sorting manner is: sorting the data transmission object based on the remaining duration of the data transmission object, to obtain the sorting result of the data transmission object. In this case, the data transmission object is sorted directly based on the remaining duration of the data transmission object without considering the priority of the data transmission object.

Still another sorting manner is: when the remaining duration of the data transmission object satisfies a first condition, performing sorting based on the remaining duration of the data transmission object, to obtain the sorting result of the data transmission object, and when the remaining duration of the data transmission object satisfies a second condition, performing sorting based on the priority of the data transmission object, to obtain the sorting result of the data transmission object.

The method supports a plurality of sorting manners based on the remaining duration. During actual application, a corresponding sorting manner may be selected based on the service requirement, which has strong flexibility.

In some possible implementations, the second device may further obtain a data volume of latency-sensitive data in the data transmission object. Correspondingly, during resource allocation or data transmission, the resource may be allocated to the data transmission object based on the sorting result or the priority of the data transmission object and the data volume of the latency-sensitive data in the data transmission object. In this way, it can be ensured that the latency-sensitive data can be preferentially transmitted, or the resource can be preferentially allocated, thereby reducing a probability of discarding the latency-sensitive data.

In some possible implementations, the second device may further set a token bucket size based on the data volume of the latency-sensitive data in the data transmission object. Correspondingly, during data transmission or resource allocation, the data in the data transmission object may be transmitted based on the sorting result or the priority of the data transmission object and with reference to the token bucket size. In this way, a short-term data burst can be dealt with.

In some possible implementations, setting the token bucket size based on the data volume of the latency-sensitive data in the data transmission object may include the following cases: when the data volume of the latency-sensitive data is greater than a first data volume, setting the token bucket size to the data volume of the latency-sensitive data, where the first data volume is determined based on a prioritized bit rate and a bucket size duration; or when the data volume of the latency-sensitive data is less than a first data volume, setting the token bucket size to the first data volume.

The token bucket size is set to a maximum value (or a larger value) between the first data volume and the data volume of the latency-sensitive data, so that the short-term data burst can be dealt with, and a case that the latency-sensitive data is discarded because of an excessively small token bucket during a service peak period or when traffic suddenly increases can be avoided.

In some possible implementations, the second device may further obtain first indication information, where the first indication information indicates to obtain the sorting result or the priority of the data transmission object based on the remaining duration of the data transmission object.

In the method, when obtaining the first indication information, the second device enables a remaining duration-based LCP mechanism. When the first indication information is not configured or is released, the second device does not enable the remaining duration-based LCP mechanism, but uses a conventional LCP mechanism. In this way, different LCP mechanisms (or different devices) can be compatible, which has high availability.

In some possible implementations, the first indication information may be obtained in the following manner: obtaining a first enable indication, where the first enable indication is used to enable obtaining of the sorting result or the priority of the data transmission object based on the remaining duration of the data transmission object; or obtaining an adjustment parameter configured on the network side, where the adjustment parameter is a constant (for example, the first value) or is related to the remaining duration; or obtaining an adjustment parameter and first information of a first data transmission object that are configured on the network side, where the adjustment parameter is a constant or is related to the remaining duration, and the first information indicates that the first data transmission object is an object whose sorting result or priority can be obtained based on the remaining duration; or obtaining first information of a first data transmission object configured on the network side, where the first information indicates that the first data transmission object is an object whose sorting result or priority can be obtained based on the remaining duration.

The adjustment parameter and the first information of the first data transmission object may alternatively be reused as the first enable indication, used to enable obtaining of the sorting result or the priority of the data transmission object based on the remaining duration of the data transmission object. In this way, a quantity of times of interaction can be reduced, so that transmission overheads can be reduced.

In some possible implementations, the second device may further obtain second indication information, where the second indication information indicates to set the token bucket size based on the data volume of the latency-sensitive data in the data transmission object.

In the method, when obtaining the second indication information, the second device enables a mechanism for setting the token bucket size based on the data volume of the latency-sensitive data in the data transmission object. When the second indication information is not configured or is released, the second device does not enable the mechanism for setting the token bucket size based on the data volume of the latency-sensitive data in the data transmission object, but uses a conventional token bucket size setting mechanism. In this way, different token bucket size setting mechanisms (or different devices) can be compatible, which has high availability.

In some possible implementations, the second indication information may be obtained in the following manner: obtaining a second enable indication, where the second enable indication is used to enable setting of the token bucket size based on the data volume of the latency-sensitive data in the data transmission object; or obtaining a first data volume configured on the network side, where the first data volume is determined based on the prioritized bit rate and the bucket size duration; or obtaining a first data volume and second information of a second data transmission object that are configured on the network side, where the second information indicates that the second data transmission object is an object whose token bucket size can be set based on the data volume of the latency-sensitive data; or obtaining second information of a second data transmission object configured on the network side, where the second information indicates that the second data transmission object is an object whose token bucket size can be set based on the data volume of the latency-sensitive data.

The first data volume and the second information of the second data transmission object may alternatively be reused as the second enable indication, used to enable the mechanism for setting the token bucket size based on the data volume of the latency-sensitive data in the data transmission object. In this way, the quantity of times of interaction can be reduced, so that the transmission overheads can be reduced.

In some possible implementations, the data transmission object includes one or more of a logical channel, a logical channel group, a protocol data unit set, or a data packet. In this way, a mechanism for obtaining the sorting result or the priority based on the remaining duration can be used for all data transmission objects of different granularities, to ensure that data of different granularities can be preferentially transmitted when the data of the different granularities needs to be urgently scheduled, thereby improving the service experience.

In some possible implementations, the remaining duration includes shortest remaining time of a data packet in the data transmission object. The data packet may be a protocol data unit (Protocol Data Unit, PDU) or a service data unit (Service Data Unit, SDU). A discard timer is configured for each data packet. The discard timer is used to determine remaining time of the data packet, specifically, remaining time until the discard timer expires. The remaining time of each data packet may be determined based on the discard timer configured for each data packet in the data transmission object, and the shortest remaining time, namely, the remaining duration of the data transmission object, may be determined based on the remaining time of each data packet.

Sorting or priority adjustment is performed with reference to the shortest remaining time of the data packet in the data transmission object, so that it can be ensured that the data that needs to be urgently scheduled can be preferentially transmitted, or the resource is preferentially allocated to the data that needs to be urgently scheduled, to avoid a case that the service experience is affected due to discard of the data.

According to a second aspect, this application provides a communication method. The method may be applied to a communication system, and is performed by a first device in the communication system. The first device may be a device configured to provide a network communication function on a network side, and is also be referred to as a network device or a network element in some cases. The network device may generally be a base station (including a functional unit of the base station, or a combination of functional units of the base station) or a core network unit.

Specifically, the first device configures first indication information, where the first indication information indicates to obtain a data transmission object or a priority of a sorting result of a data transmission object based on a remaining duration of the data transmission object.

According to the method, the first indication information is configured, to indicate a device that has a capability of performing LCP processing based on the remaining duration to obtain the sorting result or the priority based on the remaining duration. When the first indication information is not configured or the first indication information is released, a mechanism for obtaining the sorting result or the priority based on the remaining duration is not used, so that compatibility with an existing mechanism is achieved.

In some possible implementations, a manner of configuring the first indication information includes: configuring a first enable indication, where the first enable indication is used to enable obtaining of the sorting result or the priority of the data transmission object based on the remaining duration of the data transmission object; or configuring an adjustment parameter, where the adjustment parameter is a constant or is related to the remaining duration; or configuring an adjustment parameter and first information of a first data transmission object, where the first information indicates that the first data transmission object is an object whose sorting result or priority can be obtained based on the remaining duration; or configuring first information of a first data transmission object, where the first information indicates that the first data transmission object is an object whose sorting result or priority can be obtained based on the remaining duration.

The method provides a plurality of manners to indicate a second device to enable the mechanism for obtaining the priority or the sorting result based on the remaining duration, and has high availability.

In some possible implementations, the remaining time includes shortest remaining time of a data packet in the data transmission object. The shortest remaining time may be determined based on remaining time of a discard timer of the data packet. The remaining time of the discard timer refers to remaining time until the discard timer expires.

According to the method, sorting or priority adjustment is performed with reference to the shortest remaining time of the data packet in the data transmission object, so that it can be ensured that data that needs to be urgently scheduled can be preferentially transmitted, or a resource is preferentially allocated to the data that needs to be urgently scheduled, to avoid a case that service experience is affected due to discard of the data.

According to a third aspect, this application provides a communication method. The method may be applied to a communication system, and is performed by a first device in the communication system. The first device may be a device configured to provide a network communication function on a network side, which is also be referred to as a network device or a network element in some cases. The network device may generally be a base station (including a functional unit of the base station, or a combination of functional units of the base station) or a core network unit.

Specifically, the first device configures second indication information, where the second indication information indicates to set a token bucket size based on a data volume of latency-sensitive data in a data transmission object.

According to the method, the second indication information is configured, to indicate a device that has a capability of setting the token bucket size based on the data volume of the latency-sensitive data to set the token bucket size based on the data volume of the latency-sensitive data. When the second indication information is not configured or the second indication information is released, a mechanism for setting the token bucket size based on the data volume of the latency-sensitive data is not used, so that compatibility with an existing mechanism is achieved.

In some possible implementations, a manner of configuring the second indication information includes: configuring a second enable indication, where the second enable indication is used to enable setting of the token bucket size based on the data volume of the latency-sensitive data in the data transmission object; or configuring a first data volume, where the first data volume is determined based on a prioritized bit rate and a bucket size duration; or configuring a first data volume and second information of a second data transmission object, where the second information indicates that the second data transmission object is an object whose token bucket size can be set based on the data volume of the latency-sensitive data in the data transmission object; or configuring second information of a second data transmission object, where the second information indicates that the second data transmission object is an object whose token bucket size can be set based on the data volume of the latency-sensitive data in the data transmission object.

The method provides a plurality of manners to indicate the second device to enable the mechanism for setting the token bucket size based on the data volume of the latency-sensitive data, and has high availability.

A fourth aspect of this application provides an electronic device, including a memory and at least one processor. The memory is configured to store a program. The at least one processor is configured to execute the program, to enable the electronic device to implement the communication method according to the first aspect of this application.

A fifth aspect of this application provides an electronic device, including a memory and at least one processor. The memory is configured to store a program. The at least one processor is configured to execute the program, to enable the electronic device to implement the communication method according to the second aspect or the third aspect of this application.

A sixth aspect of this application provides a communication system, including a first device and a second device. The first device and the second device are configured to perform the communication method according to the first aspect or the second aspect and the third aspect of this application.

A seventh aspect of this application provides a computer storage medium, configured to store a computer program. When the computer program is executed, the communication method according to the first aspect or the second aspect and the third aspect of this application is implemented.

## BRIEF DESCRIPTION OF DRAWINGS

FIG. 1 is an exemplary diagram of a communication scenario between a base station and a terminal according to an embodiment of this application;

FIG. 2 is a flowchart of a communication method according to an embodiment of this application;

FIG. 3 is a schematic flowchart of priority adjustment according to an embodiment of this application;

FIG. 4 is a schematic flowchart of resource allocation according to an embodiment of this application;

FIG. 5 is a schematic flowchart of data transmission according to an embodiment of this application;

FIG. 6 is a flowchart of a communication method according to an embodiment of this application;

FIG. 7 is a flowchart of another communication method according to an embodiment of this application;

FIG. 8 is a flowchart of a communication method according to an embodiment of this application;

FIG. 9 is a flowchart of another communication method according to an embodiment of this application;

FIG. 10 is an interaction flowchart of a communication method according to an embodiment of this application;

FIG. 11 is an example diagram of a structure of an electronic device according to an embodiment of this application; and

FIG. 12 is an example diagram of a structure of another electronic device according to an embodiment of this application.

## DESCRIPTION OF EMBODIMENTS

The following clearly and completely describes technical solutions in embodiments of this application with reference to accompanying drawings in embodiments of this application. Terms used in the following embodiments are merely intended to describe particular embodiments, but are not intended to limit this application. As used in the specification and the appended claims of this application, singular expression forms "one", "a", "the", "the foregoing", "this", and "the one" are intended to also include an expression form like "one or more", unless otherwise clearly indicated to the contrary in the context. It should be further understood that in embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in other embodiments", and "in some other embodiments" appearing in different parts of this specification do not necessarily refer to a same embodiment, but mean "one or more but not all embodiments", unless otherwise specially emphasized in another manner. Terms "comprise", "include", "have", and other variants thereof all mean "including but not limited to", unless otherwise specifically emphasized in another manner.

"A plurality of" in embodiments of this application means two or more. It should be noted that in the descriptions in embodiments of this application, words such as "first" and "second" are merely used to distinguish between descriptions, and cannot be understood as an indication or implication of relative importance or an indication or implication of a sequence.

Embodiments of this application are applied to a communication system. The communication system may be a second generation (2G) communication system, a third generation (3G) communication system, an LTE system, a fifth generation (5G) communication system, an LTE and 5G hybrid architecture, a 5G new radio (5G New Radio, 5G NR) system, a new communication system appearing in future communication development, and the like.

The communication system includes a first device and a second device. The first device may be a device configured to provide a network communication function on a network side, and is also referred to as a network device or a network element in some cases. The network device may generally be a base station (including a functional unit of the base station, or a combination of functional units of the base station) or a core network unit. The core network unit may be a functional unit in a core network, including but not limited to an access and mobility management function (Access and Mobility Management Function, AMF) unit or a session management function (Session Management Function, SMF) unit.

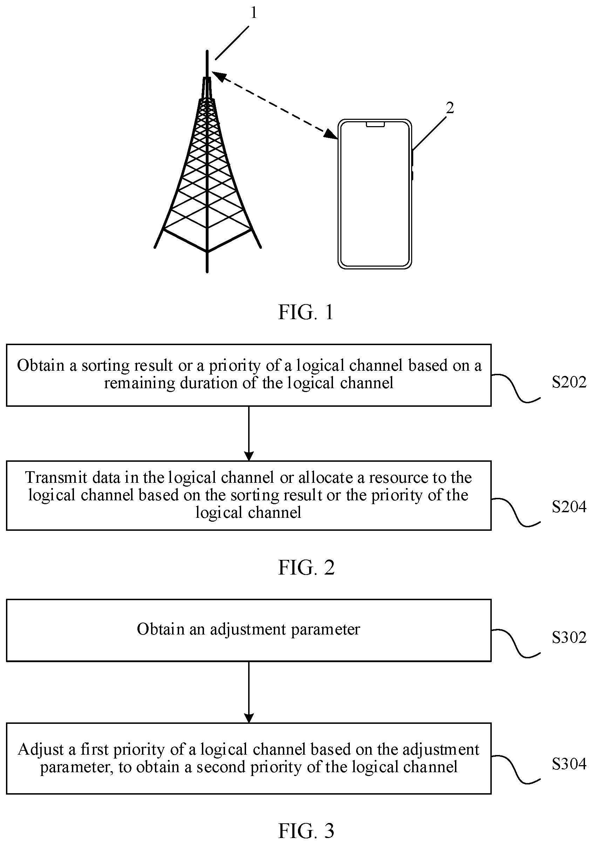

The second device may be a device that accesses a network, and may generally be a terminal. An example of the communication system is shown in FIG 1. FIG. 1 includes a base station 1 and a terminal 2.

In embodiments provided in this application, a base station may be any device that has a wireless transceiver function, including but not limited to an evolved NodeB (NodeB or eNB or e-NodeB, evolved NodeB) in long term evolution (long term evolution, LTE), a gNodeB (gNodeB or gNB) or a transmission receiving point/transmission reception point (transmission receiving point/transmission reception point, TRP) in new radio (new radio, NR), a 3GPP subsequently evolved base station, an access node in a Wi-Fi system, a wireless relay node, a wireless backhaul node, and the like. The base station may be a macro base station, a micro base station, a pico base station, a small cell, a relay station, a balloon station, or the like. The base station may include one or more intra-base-station or inter-base-station transmission reception points (Transmission Reception Points, TRPs). The base station may alternatively be a wireless controller in a cloud radio access network (cloud radio access network, CRAN) scenario, a central unit (centralized unit, CU), and/or a distributed unit (distributed unit, DU). The base station may communicate with a terminal, or may communicate with the terminal through a relay station. The terminal may communicate with a plurality of base stations of different technologies. For example, the terminal may communicate with a base station supporting an LTE network, or may communicate with a base station supporting a 5G network, or may perform dual connectivity with a base station supporting an LTE network and a base station supporting a 5G network.

In embodiments provided in this application, the terminal may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, and the like. The terminal sometimes may also be referred to as a terminal device, user equipment (user equipment, UE), an access terminal device, a vehicle-mounted terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may alternatively be a fixed terminal or a mobile terminal.

In the communication system, when an uplink service arrives, a terminal like UE may request an uplink grant (UL grant) from a network device like a base station, to transmit uplink data by using a resource (for example, a time-frequency resource) specified by the uplink grant. The uplink grant is also referred to as an uplink scheduling grant or an uplink scheduling authorization. Specifically, the UE includes a plurality of logical channels, and the UE may perform logical channel prioritization (Logical Channel Prioritization, LCP) processing to transmit the uplink data. The LCP processing may be processing when a plurality of logical channels are multiplexed on one transport channel.

Currently, the LCP processing is mapping a logical channel to the uplink grant according to a specific rule, and then filling data in the logical channel into a specified resource of the uplink grant based on a token bucket size. There are a plurality of rules for mapping the logical channel to the uplink grant. One rule may be: If a sub-carrier spacing (sub-carrier space, SCS) associated with the logical channel is consistent with an SCS (denoted as allowSCS-list) of the uplink grant, the logical channel may be mapped to the uplink grant, or data in the logical channel may be transmitted on the resource specified by the uplink grant.

There may be a plurality of logical channels that are mapped to the same uplink grant. Data in the plurality of logical channels may be filled into the specified resource of the uplink grant based on priorities. For ease of understanding, an example is used below for description. In the example, four logical channels (denoted as LCH1 to LCH4) are mapped to a same uplink grant, where priorities of LCH1 to LCH4 are sequentially 1, 4, 2, and 3. In the example, a smaller value corresponding to the priority indicates a higher priority. Correspondingly, the UE may first fill data in LCH1 into the resource specified by the uplink grant. When there is a remaining resource, the UE may fill data in LCH3 into the resource specified by the uplink grant. The rest can be deduced by analogy. Details are not described herein again.

However, in the foregoing method, latency-related information is not considered. Consequently, some data that needs to be urgently scheduled is not sent in time. Consequently, it is difficult to satisfy a service requirement, and service experience is affected.

In view of this, this application provides a communication method. According to the method, a sorting result or a priority of a data transmission object is obtained based on a remaining duration of the data transmission object, and then a resource is allocated to the data transmission object or data in a logical channel is transmitted based on the sorting result or the priority of the data transmission object. The data transmission object may be an object used for data transmission, and includes but is not limited to a logical channel, a logical channel group (logic channel group, LCG), a protocol data unit (protocol data unit, PDU) set, or a data packet. For ease of description, descriptions are provided below by using an example in which the data transmission object is a logical channel.

According to the method, the remaining duration of the logical channel is considered, the sorting result or the priority of the logical channel is obtained based on the remaining duration of the logical channel, and the resource is allocated to the logical channel or the data in the logical channel is transmitted based on the sorting result or the priority of the logical channel. This ensures that data that needs to be urgently scheduled can be preferentially sent, thereby satisfying the service requirement and improving the service experience.

To make the technical solutions of this application clearer and easy to understand, the following describes the communication method in embodiments of this application with reference to the accompanying drawings.

FIG. 2 is a flowchart of a communication method. The method includes the following steps.

S202: Obtain a sorting result or a priority of a logical channel based on a remaining duration of the logical channel.

During specific implementation, the logical channel may be sorted based on the remaining duration of the logical channel, and the sorting result of the logical channel is obtained. For example, the logical channel may be sorted based on the priority of the logical channel.

Specifically, a second device may obtain the remaining duration of the logical channel, and then obtain the sorting result of the logical channel based on the remaining duration of the logical channel, or obtain the priority of the logical channel based on the remaining duration of the logical channel. The second device may be a terminal, for example, UE, a mobile console, or a mobile station.

The remaining duration of the logical channel may refer to shortest remaining time of a data packet in the logical channel. The data packet in the logical channel may be a protocol data unit (Protocol Data Unit, PDU) or a service data unit (Service Data Unit, SDU). The shortest remaining time may be determined based on remaining time of a discard timer. The remaining time of the discard timer refers to remaining time until the discard timer expires.

For the remaining duration of the logical channel described in S202, the logical channel may alternatively be replaced with a concept of a logical channel group (logic channel group, LCG), a data radio bearer (data radio bear, DRB), a PDU set, or a data packet. A sorting result or a priority of the logical channel group, the DRB, the PDU set, or the data packet is obtained based on a remaining duration of the logical channel group, the DRB, the PDU set, or the data packet. The remaining duration of the logical channel group may be shortest remaining time of a data packet in the logical channel group, the remaining duration of the DRB may be shortest remaining time of a data packet in the DRB, and the remaining duration of the PDU set may be shortest remaining time of a data packet in the PDU set.

In some possible implementations, the second device may first obtain a first priority of the logical channel. The first priority may be a priority configured by a first device, for example, a priority configured by the first device based on service importance or a quality of service (quality of service, QoS) latency requirement. The first device may be a network device, including but not limited to a base station and a core network unit. Correspondingly, the second device may determine a second priority of the logical channel based on the remaining duration and the first priority of the logical channel. The second priority is a priority obtained through adjustment based on the remaining duration of the logical channel, in other words, the second priority is a priority determined by considering latency information.

In some other possible implementations, the second device may alternatively directly determine the priority of the logical channel based on the remaining duration of the logical channel. For example, the second device may determine the priority of the logical channel based on the remaining duration of the logical channel and configured mapping information or a configured mapping rule between the remaining duration and the priority.

The remaining duration of the logical channel not only may be used to obtain the priority of the logical channel, but also may be used to sort the logical channel. This application supports a plurality of sorting manners. Details are separately described below by using examples.

In a first possible implementation, the second device may obtain the priority of the logical channel based on the remaining duration of the logical channel, and then sorts the logical channel based on the priority of the logical channel, to obtain the sorting result of the logical channel. For example, the second device may sort logical channels in descending order of priorities (for example, when a smaller value corresponding to a priority indicates a higher priority, the order may be an ascending order of values corresponding to the priorities), to obtain a sorting result of the logical channels.

In a second possible implementation, the second device may sort the logical channel based on the remaining duration of the logical channel, to obtain the sorting result of the logical channel. Alternatively, the second device does not consider the priority of the logical channel (ignores the priority of the logical channel), and directly sorts the logical channel based on the remaining duration of the logical channel.

In a third possible implementation, the second device may sort the logical channel based on the remaining duration of the logical channel when the remaining duration of the logical channel satisfies a first condition, to obtain the sorting result of the logical channel. In other words, the second device sorts the logical channel only based on the remaining duration when the first condition is satisfied, and ignores the priority or does not consider the priority. The second device sorts the logical channel based on the priority of the logical channel when the remaining duration of the logical channel satisfies a second condition, to obtain the sorting result of the logical channel.

The first condition and the second condition may be set based on experience. For example, the first condition may be that the remaining duration is less than a first threshold, and the second condition may be that the remaining duration is greater than the first threshold. For another example, the first condition may be that the logical channel is ranked among top m logical channels sorted in ascending order of remaining durations, where m may be less than n, and n represents a quantity of logical channels; and the second condition may be that the logical channel is ranked among top k logical channels sorted in descending order of remaining durations, where k may be less than n, and m + k = n.

For ease of understanding, this application provides an example for description. In this example, first priorities of LCH1 to LCH4 are sequentially 1 to 4, remaining durations of LCH1 to LCH4 are sequentially 2 milliseconds (millyseconds, ms), 5 ms, 1 ms, and 3 ms, the first threshold is 2 ms, and only LCH3 satisfies the first threshold. In this case, although the priority of LCH3 is 3, the priority may be ignored, and an order of the LCH3 is set as the first. The remaining LCHs such as LCH1, LCH2, and LCH4 are still sorted based on the original priorities. Based on this, a sorting result obtained with reference to the foregoing remaining durations may be LCH3, LCH1, LCH2, and LCH4.

S204: Transmit data in the logical channel or allocate a resource to the logical channel based on the sorting result or the priority of the logical channel.

Specifically, the second device (for example, the UE) may transmit the data in the logical channel or allocate the resource to the logical channel based on the sorting result or the priority of the logical channel. Transmitting the data in the logical channel may include allocating the resource to the logical channel, for example, allocating a resource specified by an uplink grant to the logical channel based on the sorting result or the priority of the logical channel, and then filling the data in the logical channel into the resource allocated to the logical channel, to transmit the data in the logical channel by using the resource allocated to the logical channel.

When allocating the resource to the logical channel, the second device may sequentially fill, based on the sorting result of the logical channel, the data into the resource specified by the uplink grant. When the resource is filled up, the second device may stop filling. The sorting result may be a sorting result based on remaining durations in ascending order, or a sorting result based on priorities that are determined based on remaining durations and that are in descending order. For example, a sorting result of LCH1 to LCH4 based on the remaining durations in ascending order is LCH2, LCH3, LCH4, and LCH1. The second device may first fill data in LCH2 into the resource specified by the uplink grant. When the resource is not filled up, the second device may continue to fill data in LCH3 into the resource specified by the uplink grant. The rest can be deduced by analogy. When the resource specified by the uplink grant is filled up, the second device may transmit the filled data to a network side by using the resource.

Alternatively, the second device may fill, based on the priority of the logical channel, the data into the resource specified by the uplink grant. When the resource is filled up, the second device may stop filling. The second device may sequentially use the data in descending order of priorities of logical channels for filling, or the second device may preferentially use data in a logical channel whose priority is higher than a specified level for filling. If the resource is not filled up by the data in the logical channel whose priority is higher than the specified level, the second device may select data in at least one logical channel from the remaining logical channels based on a data volume of data in the remaining logical channels to continue to fill the resource until the resources is filled up.

Based on the foregoing descriptions, it can be learned that, in the communication method in this application, the remaining duration of the logical channel is considered, the sorting result or the priority of the logical channel is obtained based on the remaining duration of the logical channel, and the resource is allocated to the logical channel or the data in the logical channel is transmitted based on the sorting result or the priority of the logical channel. This ensures that data that needs to be urgently scheduled can be preferentially sent, thereby satisfying a service requirement and improving service experience.

In the embodiment of FIG. 2, the second device may determine the second priority of the logical channel based on the remaining duration and the first priority of the logical channel. The second device supports performing priority adjustment in a plurality of adjustment manners. The following provides detailed descriptions with reference to the accompanying drawings.

FIG. 3 is a schematic flowchart of priority adjustment. The following steps are included.

S302: Obtain an adjustment parameter.

The adjustment parameter (denoted as A) may be a constant, or may be a variable related to the remaining duration. For example, the adjustment parameter may be a first value. For another example, the adjustment parameter may be a variable that is positively or negatively correlated to the remaining duration.

Specifically, the second device may obtain the adjustment parameter. The adjustment parameter may be configured by the first device. The second device may obtain the adjustment parameter configured by the first device. For example, when the adjustment parameter is the first value, the second device may obtain the first value configured by the first device. For another example, when the adjustment parameter is related to the remaining duration, the second device may obtain the remaining duration, and then determine the adjustment parameter based on the remaining duration and a mapping relationship (for example, a function representing correlation) that is between the remaining duration and the adjustment parameter and that is configured by the first device.

In some possible implementations, the adjustment parameter may alternatively be configured by the second device. The second device (for example, the UE) may store a predefined table, and the adjustment parameter is specified in the table. For example, adjustment parameters corresponding to different remaining durations may be specified in the table. When obtaining a remaining duration of a data transmission object, the second device may look up the table based on the remaining duration, to obtain an adjustment parameter.

S304: Adjust the first priority of the logical channel based on the adjustment parameter, to obtain the second priority of the logical channel.

In a possible implementation, whether the first priority of the logical channel needs to be adjusted based on the adjustment parameter is determined based on a value of the remaining duration of the logical channel. For example, when the remaining duration of the logical channel is less than a threshold (for example, the first threshold), the first priority of the logical channel is adjusted based on the adjustment parameter, to obtain the second priority of the logical channel. In this case, the priority of the logical channel is the second priority. When the remaining duration of the logical channel is greater than the threshold, the priority of the logical channel is the first priority, and for the logical channel, the first priority of the logical channel does not need to be adjusted based on the adjustment parameter. That is, the adjustment parameter or step S304 is not applied to a logical channel whose remaining duration is greater than the threshold.

In another possible implementation, regardless of a value of the remaining duration of the logical channel, for all configured logical channels, first priorities of the logical channels need to be adjusted based on the adjustment parameter. In this case, a value of the adjustment parameter may be determined based on the value of the remaining duration of the logical channel.

During specific implementation, priority adjustment may be performed on a logical channel with any remaining duration in a uniform adjustment manner. Alternatively, logical channels with different remaining durations may be distinguished, and priority adjustment is performed on the logical channels with the different remaining durations in different adjustment manners. Alternatively, priority adjustment is performed on logical channels with some remaining durations, and is not performed on other logical channels.

Different implementations of priority adjustment are separately described below.

A first implementation is: adjusting the first priority of the logical channel based on an adjustment parameter related to the remaining duration, to obtain the second priority of the logical channel. In this way, priority adjustment can be performed on logical channels with different remaining durations in a unified adjustment manner.

A second implementation is: when the remaining duration of the logical channel satisfies the first condition, adjusting the first priority of the logical channel based on the first value (for example, a fixed value configured on the network side) or an adjustment parameter related to the remaining duration, to obtain the second priority of the logical channel. The first condition may be set based on experience, for example, may be set as that the remaining duration is less than the first threshold, or may be set as that the remaining duration is greater than the first threshold. A correlation function between the first value or the remaining duration and the adjustment parameter may vary with different first conditions. For example, the remaining duration is less than the first threshold, and the first value may be less than 1, or the remaining duration is greater than the first threshold, and the first value may be greater than 1.

A third implementation is: when the remaining duration of the logical channel satisfies the first condition, adjusting the first priority based on the first value or a first adjustment parameter related to the remaining duration, to obtain the second priority of the logical channel; and when the remaining duration of the logical channel satisfies the second condition, adjusting the first priority based on a second value or a second adjustment parameter related to the remaining duration, to obtain the second priority of the logical channel. The first condition and the second condition may be set based on experience. For example, the first condition may be set as that the remaining duration is less than the first threshold, and the second condition may be set as that the remaining duration is greater than the first threshold. In some cases, the second condition may alternatively be set as that the remaining duration is greater than a second threshold.

The third implementation may include a plurality of cases: Case 1: When the remaining duration satisfies the first condition, priority adjustment is performed based on the first value, and when the remaining duration satisfies the second condition, priority adjustment is performed based on the second value. Case 2: When the remaining duration satisfies the first condition, priority adjustment is performed based on the first adjustment parameter related to the remaining duration, and when the remaining duration satisfies the second condition, priority adjustment is performed based on the second adjustment parameter related to the remaining duration. Case 3: When the remaining duration satisfies the first condition, priority adjustment is performed based on the first value, and when the remaining duration satisfies the second condition, priority adjustment is performed based on the second adjustment parameter related to the remaining duration. Case 4: When the remaining duration satisfies the first condition, priority adjustment is performed based on the first adjustment parameter related to the remaining duration, and when the remaining duration satisfies the second condition, priority adjustment is performed based on the second value. It can be learned that, in this application, distinguishment between data transmission objects with different remaining durations is supported, and priority adjustment is performed on the data transmission objects with the different remaining durations by using different adjustment parameters (for example, a fixed value and a variable value related to the remaining duration) or different values (for example, the first value and the second value) of a same type of adjustment parameter.

When priority adjustment is performed based on the adjustment parameter, the priority adjustment may be implemented by using an arithmetic operation. The arithmetic operation refers to calculation rules of addition, subtraction, multiplication, and division, and is an operation for combining a plurality of numbers into one number. In this application, the second device may perform the arithmetic operation on the first priority based on the adjustment parameter, to obtain the second priority of the logical channel.

In some possible implementations, when a constraint condition is further set for a value corresponding to the priority, priority adjustment may be further performed based on the constraint condition. The logical channel may correspond to a highest logical information priority allowed to be adjusted, and a priority obtained through priority adjustment by using the arithmetic operation cannot exceed the highest logical channel priority allowed to be adjusted of the logical channel. For example, when a smaller value corresponding to the priority indicates a higher priority, the value corresponding to the priority may include the following constraint condition: The value of the priority is not less than 0. In this way, when the second priority obtained by adjusting the first priority based on the adjustment parameter is less than 0, the second priority may be set to 0. For another example, when a larger value corresponding to the priority indicates a higher priority, the value corresponding to the priority may include the following constraint condition: The value of the priority is not greater than 10 (which may alternatively be another value, and may be set based on experience). In this way, when the second priority obtained by adjusting the first priority based on the adjustment parameter is greater than 10, the second priority may be set to 10.

The remaining duration and the adjustment parameter may be mapped by using a table, and one remaining duration or remaining duration range corresponds to one adjustment parameter.

The second device may obtain a constraint condition. The constraint condition may be predefined, or may be configured on the network side. The second device may adjust the first priority based on the adjustment parameter and with reference to the constraint condition, to obtain the second priority. The second priority satisfies the foregoing constraint condition.

Details are separately described below by using examples in which multiplication, subtraction, addition, and division operations are performed.

When the priority adjustment is performed by using the multiplication operation, the second priority may be determined by using the following formula:

$$Pri_{2rd} = A \cdot Pri_{1st} \qquad (1)$$

$Pri_{1st}$ represents the first priority of the logical channel, $A$ represents the adjustment parameter, and $Pri_{2rd}$ represents the second priority of the logical channel. The priority of the LCH may be the first priority or the second priority obtained through adjustment. Further, the value corresponding to the priority may further include a constraint condition. For example, a highest priority to which the priority of the logical channel is allowed to be dynamically adjusted is m, m is an integer greater than or equal to 0, and a value of m may be predefined in a protocol, or may be configured by the network side to the second device by using a system message or a radio resource control (Radio Resource Control, RRC) message. Correspondingly, the priority of the logical channel may be updated to max{m, $A \cdot Pri_{1st}$}.

A value of A may be assigned based on the remaining duration of the logical channel. Details are separately described below by using examples.

Implementation 1: When the remaining duration of the LCH is less than (or equal to) the first threshold, A is a first value (for example, a fixed value configured on the network side) greater than or equal to 0 and less than 1.

Further, when the remaining duration of the LCH is greater than the first threshold, A is 1 or greater than 1.

In a case, when the remaining duration of the LCH is greater than the first threshold, the priority of the LCH is the first priority and does not need to be obtained by using the formula (1). In other words, the formula is not applicable to a case in which the remaining duration of the LCH is greater than the first threshold.

It should be noted that, when a larger value corresponding to the priority of the logical channel indicates a higher priority of the logical channel, if the remaining duration of the LCH is less than (or equal to) the first threshold, $A$ is 1 or a first value (for example, a fixed value configured on the network side) greater than 1; and if the remaining duration of the LCH is greater than the first threshold, $A$ is greater than or equal to 0 and less than 1.

For example, $A$ is 0.5. When the first priorities of LCH1 to LCH4 are 1, 2, 3, and 4, LCH1 has the highest first priority, and LCH4 has the lowest first priority. The remaining durations of LCH2 and LCH4 are less than the first threshold, so that second priorities of LCH2 and LCH4 may be 1 and 2. The priorities of LCH1 and LCH3 may not be adjusted, and second priorities of LCH1 and LCH3 are the same as the first priorities of LCH1 and LCH3. Based on this, the second priorities of LCH1 to LCH4 are sequentially 1, 1, 3, and 2. LCH1 and LCH2 have the highest priority, LCH4 has the second highest priority, and LCH3 has the lowest priority.

Correspondingly, during resource allocation, the resource may be preferentially allocated to LCH1 and LCH2, then allocated to LCH4, and then allocated to LCH3. Similarly, during data transmission, data in LCH1 and LCH2 may be preferentially transmitted, then data in LCH4 is transmitted, and then data in LCH3 is transmitted.

Implementation 2: $A$ is in direct proportion to the remaining duration of the LCH. When the remaining duration is smaller, the value of $A$ is smaller.

In an implementation, a correspondence between the remaining duration and $A$ is defined in a first table. When the remaining duration is less than a threshold 1, the value of A may be a first value. When the remaining duration is less than a threshold 2 and greater than a threshold 3, the value of $A$ may be a second value. When the remaining duration is greater than a threshold 4, the value of $A$ may be a third value.

For example, when the first priorities of LCH1 to LCH4 are sequentially 1, 2, 3, and 4, LCH1 has the highest first priority, and LCH4 has the lowest first priority. The remaining durations of LCH1 to LCH4 are sequentially 6 milliseconds (milliseconds, ms), 2 ms, 5 ms, and 1 ms. It may be determined, based on the remaining durations, that values of $A$ are sequentially 6/10, 2/10, 5/10, and 1/10, where 1/10 is an adjustment coefficient, for example, an adjustment coefficient configured on the network side, and is used to determine the value of $A$. The UE may sequentially determine values of $A$ corresponding to the logical channels based on the adjustment coefficient and the remaining durations of the logical channels. Based on the first priorities and the values of $A,$ it may be determined that the second priorities are sequentially 0.6, 0.4, 1.5, and 0.4. A sorting result of the logical channels based on the second priorities is LCH2, LCH4, LCH1, and LCH3 sequentially.

The foregoing implementation 2 is described by using an example in which a smaller value corresponding to the priority of the logical channel indicates a higher priority. In another implementation, a larger value corresponding to the priority of the logical channel indicates a higher priority of the logical channel. In this case, $A$ is in inverse proportion to the remaining duration of the LCH. When the remaining duration is smaller, the value of $A$ is larger. For example, a correspondence between the remaining duration and A is defined in a second table. When the remaining duration is less than a threshold 1, the value of $A$ may be a first value. When the remaining duration is less than a threshold 2 and greater than a threshold 3, the value of $A$ may be a second value. When the remaining duration is greater than a threshold 4, the value of $A$ may be a third value. The first value may be greater than the second value, and the second value may be greater than the third value.

Implementation 3: When the remaining duration of the LCH is less than (or equal to) the first threshold, the value of $A$ is greater than or equal to 0 and less than 1. In addition, the value of $A$ is in direct proportion to the remaining duration of the LCH. When the remaining duration is smaller, the value of $A$ is smaller.

Further, when the remaining duration is greater than the first threshold, the value of $A$ is 1 or greater than 1.

In a case, when the remaining duration of the LCH is greater than the first threshold, the priority of the LCH is the first priority and does not need to be obtained by using the formula (1). In other words, the formula is not applicable to a case in which the remaining duration of the LCH is greater than the first threshold.

For example, the first priorities of LCH1 to LCH4 are sequentially 1, 2, 3, and 4, LCH1 has the highest first priority, and LCH4 has the lowest first priority. The remaining durations of LCH1 to LCH4 are 6 ms, 3 ms, 5 ms, and 1 ms. If the first threshold is 4 ms, it may be determined to adjust the first priorities of LCH2 and LCH3. Values of A used for priority adjustment are sequentially 3/5 and 1/5. The first priorities of LCH1 and LCH4 may not be adjusted, and the second priorities of LCH1 and LCH4 are equal to the first priorities of LCH1 and LCH4. In this way, the second priorities of LCH1 to LCH4 are sequentially 1, 1.2, 3, and 0.8. A sorting result of the logical channels based on the second priorities is LCH4, LCH1, LCH2, and LCH3 sequentially.

It should be noted that, in the foregoing implementation 3, when the remaining duration is greater than the first threshold, the value of A may alternatively be greater than 1.

The foregoing implementation 3 is described by using an example in which a smaller value corresponding to the priority of the logical channel indicates a higher priority. In another implementation, a larger value corresponding to the priority of the logical channel indicates a higher priority of the logical channel. In this case, when the remaining duration of the LCH is less than (or equal to) the first threshold, the value of $A$ is greater than (or equal to) 1. In addition, the value of $A$ is in inverse proportion to the remaining duration of the LCH. Further, when the remaining duration of the LCH is greater than the first threshold, the value of $A$ is greater than or equal to 0 and less than 1.

When the priority adjustment is performed by using the subtraction operation, the second priority may be determined by using the following formula:

$$Pri_{2rd} = Pri_{1st} - A \qquad (2)$$

$Pri_{1st}$ represents the first priority of the logical channel, $A$ represents the adjustment parameter, and $Pri_{2rd}$ represents the second priority of the logical channel. The priority of the LCH may be the first priority or the second priority obtained through adjustment. Similar to an adjustment manner based on multiplication, the value corresponding to the priority may further include a constraint condition. For example, a highest priority to which the priority of the logical channel is allowed to be dynamically adjusted is m. A value of m may be predefined in a protocol, or may be configured by the network side to the second device by using a system message or an RRC message. Correspondingly, the priority of the logical channel may be updated to max{m, $Pri_{1st}$ - A}. In another adjustment manner, for specific implementation of performing priority adjustment with reference to the constraint condition, refer to the adjustment manner based on the multiplication or the subtraction. Details are not described herein again.

A value of A may be assigned based on the remaining duration of the logical channel. Details are separately described below by using examples.

Implementation 1: When the remaining duration of the LCH is less than (or equal to) the first threshold, the value of *A* is a first value (for example, a fixed value configured on the network side) greater than 0.

Further, when the remaining duration is greater than the first threshold, priority adjustment may not be performed, or the value of *A* is 0. In some cases, when the remaining duration is greater than the first threshold, priority adjustment may alternatively be performed, and the value of *A* used for priority adjustment may be less than 0.

It should be noted that the foregoing implementation 1 is described by using an example in which a smaller value corresponding to the priority of the logical channel indicates a higher priority. In another implementation, a larger value corresponding to the priority of the logical channel indicates a higher priority of the logical channel. In this case, when the remaining duration of the LCH is less than (or equal to) the first threshold, the value of *A* is a first value greater than 1. When the remaining duration of the LCH is greater than the first threshold, *A* is greater than or equal to 0 and less than 1.

Implementation 2: The value of *A* is in inverse proportion to the remaining duration of the LCH. When the remaining duration is smaller, the value of *A* is larger.

Specifically, a correspondence between the remaining duration and *A* may be defined by using a table. For example, it is defined in a table that when the remaining duration is less than a threshold 1, the value of *A* may be a first value; when the remaining duration is less than a threshold 2 and greater than a threshold 3, the value of *A* may be a second value; and when the remaining duration is greater than a threshold 4, the value of *A* may be a third value. The first value may be greater than the second value, and the second value may be greater than the third value.

It should be noted that the implementation 2 is described by using an example in which a smaller value corresponding to the priority of the logical channel indicates a higher priority. In another implementation, when a larger value corresponding to the priority of the logical channel indicates a higher priority of the logical channel, the value of *A* is in direct proportion to the remaining duration of the LCH. When the remaining duration is smaller, the value of *A* is smaller.

Implementation 3: When the remaining duration is less than (or equal to) the first threshold, the value of *A* is in inverse proportion to the remaining duration of the LCH. When the remaining duration is smaller, the value of *A* is larger.

It should be noted that the foregoing implementation 3 is described by using an example in which a smaller value corresponding to the priority of the logical channel indicates a higher priority. In another implementation, when a larger value corresponding to the priority of the logical channel indicates a higher priority of the logical channel, if the remaining duration of the LCH is less than (or equal to) the first threshold, the value of *A* is in direct proportion to the remaining duration of the LCH. When the remaining duration is smaller, the value of *A* is smaller.

When priority adjustment is performed by using the addition operation, the second priority may be determined by using the following formula:

$$Pri_{2rd} = Pri_{1st} + A \hspace{5cm} (3)$$

$Pri_{1st}$ represents the first priority of the logical channel, *A* represents the adjustment parameter, and $Pri_{2rd}$ represents the second priority of the logical channel. The priority of the LCH may be the first priority or the second priority obtained through adjustment.

Descriptions about a case in which *A* is greater than 0 and a case in which *A* is less than 0 are separately provided below.

When the value of *A* is less than 0, the following implementations may be included.

Implementation 1: When the remaining duration of the LCH is less than (or equal to) the first threshold, the value of *A* is a first value (for example, a fixed value configured on the network side) less than 0.

Further, when the remaining duration of the LCH is greater than the first threshold, priority adjustment may not be performed, or the value of *A* may be 0. The priority of the LCH is the first priority, and does not need to be obtained by using the formula (3). In other words, the formula is not applicable to a case in which the remaining duration of the LCH is greater than the first threshold.

It should be noted that, when a larger value corresponding to the priority of the logical channel indicates a higher priority of the logical channel, if the remaining duration of the LCH is less than (or equal to) the first threshold, priority adjustment may not be performed; and if the remaining duration of the LCH is greater than the first threshold, the value of *A* is a first value less than 0.

Implementation 2: The value of *A* is in direct proportion to the remaining duration of the LCH. When the remaining duration is smaller, the value of *A* is smaller (where an absolute value of *A* is larger).

A correspondence between the remaining duration and *A* may be defined by using a table. For example, it may be defined in a first table that when the remaining duration is less than a threshold 1, the value of *A* may be a first value; when the remaining duration is less than a threshold 2 and greater than a threshold 3, the value of *A* may be a second value; and when the remaining duration is greater than a threshold 4, the value of $A$ may be a third value. The first value is less than the second value, and the second value is less than the third value.

It should be noted that the foregoing implementation 2 is described by using an example in which a smaller value corresponding to the priority of the logical channel indicates a higher priority. In another implementation, a larger value corresponding to the priority of the logical channel indicates a higher priority of the logical channel. In this case, $A$ is in inverse proportion to the remaining duration of the LCH. When the remaining duration is smaller, the value of $A$ is larger.

Implementation 3: When the remaining duration of the LCH is less than (or equal to) the first threshold, the value of $A$ is in direct proportion to the remaining duration of the LCH. When the remaining duration is smaller, the value of $A$ is smaller.

Further, when the remaining duration is greater than the first threshold, the value of $A$ is 0. The priority of the LCH is the first priority, and does not need to be obtained by using the formula (3). In other words, the formula is not applicable to a case in which the remaining duration of the LCH is greater than the first threshold.

Similarly, when a larger value corresponding to the priority of the logical channel indicates a higher priority, if the remaining duration of the LCH is less than (or equal to) the first threshold, priority adjustment may not be performed; and if the remaining duration of the LCH is greater than the first threshold, the value of $A$ is in inverse proportion to the remaining duration of the LCH, and a smaller remaining duration indicates a larger value of $A$.

When the value of $A$ is greater than 0, the following implementations may be included.

Implementation 1: When the remaining duration of the LCH is less than (or equal to) the first threshold, priority adjustment may not be performed. In other words, the formula (3) is not applied, or the value of $A$ in the formula (3) is 0. When the remaining duration of the LCH is greater than the first threshold, the value of $A$ is a first value (for example, a fixed value configured on the network side) greater than 0.

When a larger value corresponding to the priority of the logical channel indicates a higher priority, if the remaining duration of the LCH is less than (or equal to) the first threshold, the value of $A$ is a first value greater than 0; and if the remaining duration of the LCH is greater than the first threshold, priority adjustment may not be performed.

Implementation 2: The value of $A$ is in direct proportion to the remaining duration of the LCH. When the remaining duration is smaller, the value of $A$ is smaller.

A correspondence between the remaining duration and $A$ may be defined by using a table. For example, it may be defined in a first table that when the remaining duration is less than a threshold 1, the value of $A$ may be a first value; when the remaining duration is less than a threshold 2 and greater than a threshold 3, the value of $A$ may be a second value; and when the remaining duration is greater than a threshold 4, the value of $A$ may be a third value. The first value is less than the second value, and the second value is less than the third value.

It should be noted that the foregoing implementation 2 is described by using an example in which a smaller value corresponding to the priority of the logical channel indicates a higher priority. In another implementation, a larger value corresponding to the priority of the logical channel indicates a higher priority of the logical channel. In this case, $A$ is in inverse proportion to the remaining duration of the LCH. When the remaining duration is smaller, the value of $A$ is larger.

Implementation 3: When the remaining duration of the LCH is less than (or equal to) the first threshold, priority adjustment may not be performed. In other words, the formula (3) is not applied, or the value of A in the formula (3) is 0. When the remaining duration of the LCH is greater than the first threshold, the value of $A$ is greater than 0. In addition, the value of $A$ is in direct proportion to the remaining duration of the LCH.

It should be noted that the foregoing implementation 3 is described by using an example in which a smaller value corresponding to the priority of the logical channel indicates a higher priority. In another implementation, a larger value corresponding to the priority of the logical channel indicates a higher priority of the logical channel. In this case, when the remaining duration of the LCH is less than (or equal to) the first threshold, A is in inverse proportion to the remaining duration of the LCH. When the remaining duration is smaller, the value of A is larger. Further, when the remaining duration of the LCH is greater than the first threshold, priority adjustment may not be performed.

When priority adjustment is performed by using the division operation, the second priority may be determined by using the following formula:

$$Pri_{2rd} = Pri_{1st} \div A \tag{4}$$

$Pri_{1st}$ represents the first priority of the logical channel, A represents the adjustment parameter, and $Pri_{2rd}$ represents the second priority of the logical channel. The priority of the LCH may be the first priority or the second priority obtained through adjustment.

Descriptions about a case in which $A$ is greater than 1 and a case in which A is less than 1 are separately provided below.

When the value of $A$ is greater than 1, the following implementations may be included.

Implementation 1: When the remaining duration of the LCH is less than (or equal to) the first threshold, the value of *A* may be a first value greater than 1, for example, may be a fixed value configured on the network side. Correspondingly, the second priority of the LCH may be the first priority ÷ A. When the remaining duration of the LCH is greater than the first threshold, the value of *A* may be equal to 1, or priority adjustment may not be performed. The second priority of the LCH may be equal to the first priority of LCH1. In this case, the priority of the LCH does not need to be obtained by using the formula (4). In other words, the formula is not applicable to a case in which the remaining duration of the LCH is greater than the first threshold.

Implementation 2: The value of *A* is in inverse proportion to the remaining duration of the LCH. When the remaining duration is smaller, the value of *A* is larger.

A correspondence between the remaining duration and *A* may be defined by using a table. For a specific implementation process, refer to descriptions of the foregoing related content. Details are not described herein again.

Implementation 3: When the remaining duration of the LCH is less than (or equal to) the first threshold, the value of *A* may be in direct proportion to the remaining duration of the LCH. When the remaining duration is smaller, the value of *A* is larger. Correspondingly, the second priority may be the first priority ÷ *A.* When the remaining duration of the LCH is greater than the first threshold, the value of *A* may be 1, or priority adjustment may not be performed. The second priority is equal to the first priority. In this case, the priority of the LCH does not need to be obtained by using the formula (4). In other words, the formula is not applicable to a case in which the remaining duration of the LCH is greater than the first threshold.

The foregoing implementations 1, 2, and 3 are all described by using the example in which a smaller value corresponding to the priority of the logical channel indicates a higher priority. In another implementation, a larger value corresponding to the priority of the logical channel indicates a higher priority of the logical channel, and the value of *A* may vary with different remaining durations of the LCH.

When the value of *A* is less than 1, the following implementations may be included.

Implementation 1: When the remaining duration of the LCH is less than (or equal to) the first threshold, the value of *A* may be equal to 1. In other words, priority adjustment may not be performed. The second priority of the LCH may be equal to the first priority of LCH1. The priority of the LCH does not need to be obtained by using the formula (4). In other words, the formula is not applicable to a case in which the remaining duration of the LCH is less than (or equal to) the first threshold. When the remaining duration of the LCH is greater than the first threshold, the value of A may be a first value less than 1, for example, may be a fixed value configured on the network side. Correspondingly, the second priority may be the first priority ÷ *A.*

Implementation 2: The value of *A* is in direct proportion to the remaining duration of the LCH. When the remaining duration is smaller, the value of *A* is smaller.

Implementation 3: When the remaining duration of the LCH is less than (or equal to) the first threshold, the value of A may be equal to 1. In other words, priority adjustment may not be performed. The second priority of the LCH may be equal to the first priority of LCH1. The priority of the LCH does not need to be obtained by using the formula (4). In other words, the formula is not applicable to a case in which the remaining duration of the LCH is less than (or equal to) the first threshold. When the remaining duration of the LCH is greater than the first threshold, the value of *A* is in direct proportion to the remaining duration of the LCH. When the remaining duration is smaller, the value of *A* is smaller. Correspondingly, the second priority may be the first priority ÷ *A.*

Similar to the implementations 1, 2, and 3 when the value of *A* is greater than 1, implementations 1, 2, and 3 when the value of A is less than 1 are also described by using an example in which a smaller value corresponding to the priority of the logical channel indicates a higher priority. In another implementation, a larger value corresponding to the priority of the logical channel indicates a higher priority of the logical channel, and the value of A may vary with different remaining durations of the LCH.

The foregoing priority adjustment manner is mainly implemented based on the remaining latency. In some possible implementations, a total data volume of data packets whose remaining latency satisfies a condition may be further obtained, and the priority is obtained based on the total data volume. That the remaining latency satisfies the condition includes that the remaining latency is less than the first threshold, or the remaining latency is greater than the first threshold. An example in which the remaining latency is less than the first threshold is used for description. When priority adjustment is performed by using the formula (2), a mapping relationship between a total data volume of data packets whose remaining latency is less than the first threshold and the offset A may be configured on the network side. The second device may obtain the total data volume of the data packets whose remaining latency is less than the first threshold in the logical channel, obtain, based on the total data volume and the mapping relationship configured on the network side, the value of A, and obtain, based on the value of *A,* a priority obtained through adjustment.

The mapping relationship between the total data volume of the data packets whose remaining latency is less than the first threshold and the offset *A* may be configured by using a table. For example, it may be defined in the table that when the total data volume is less than 100 bytes, the value of *A* is 4; when the total data volume is greater than or equal to 100 bytes and less than 200 bytes, the value of *A* is 3; when the total data volume is greater than or equal to 200 bytes and less than 500 bytes, the value of *A* is 2; and when the total data volume is greater than or equal to 500 bytes, the value of *A* is 4. Similarly, when the sorting result of the logical channels is obtained based on the remaining latency of the logical channels, the logical channels may alternatively be sorted based on the total data volume of data packets whose remaining latency satisfies the condition in the logical channels, to obtain the sorting result. For a specific implementation process, refer to a priority adjustment process based on the total data volume. Details are not described herein again.

Considering that the data in the logical channel may include latency-sensitive data, when the resource is allocated to transmit the data in the logical channel, if a data volume of the latency-sensitive data is not considered, during resource allocation, resource allocation may be performed based on a resource size and a current entire buffer volume. However, during resource allocation, not all of the latency-sensitive data may be included. Consequently, the latency-sensitive data is not transmitted, resulting in discard of the latency-sensitive data. Therefore, resource allocation and data transmission may alternatively be performed with reference to the data volume of the latency-sensitive data. Descriptions are provided below by using an example in which resource allocation is performed with reference to the data volume of the latency-sensitive data.

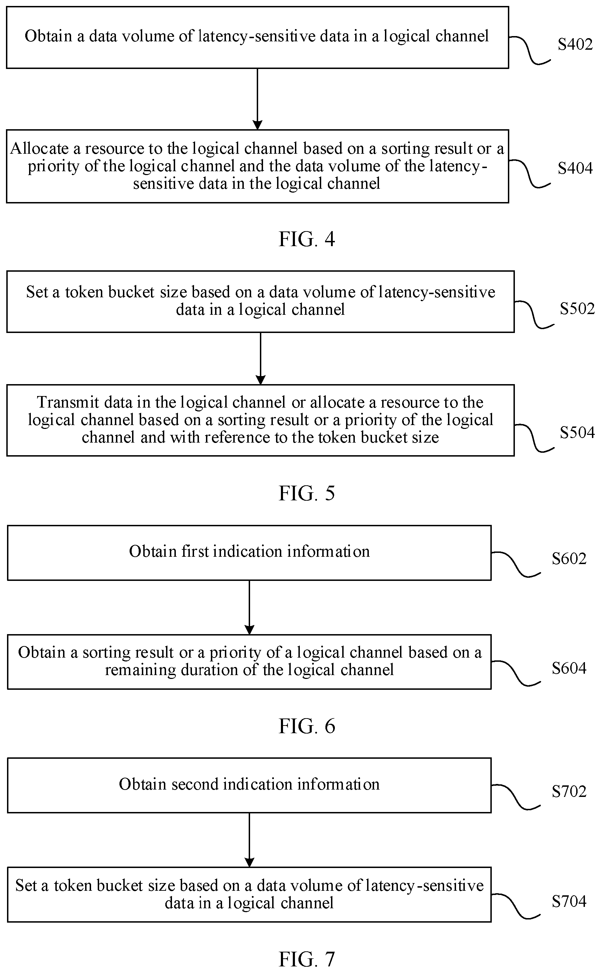

FIG. 4 is a schematic flowchart of resource allocation. The following steps are specifically included.

S402: Obtain the data volume of the latency-sensitive data in the logical channel.

Specifically, the second device (for example, the UE) needs to determine whether the latency-sensitive data exists in the logical channel, and obtain the data volume of the latency-sensitive data when the latency-sensitive data exists in the logical channel. The latency-sensitive data includes a data packet whose remaining duration is less than a threshold.

S404: Allocate the resource to the logical channel based on the sorting result or the priority of the logical channel and the data volume of the latency-sensitive data in the logical channel.

Specifically, when the resource is allocated to the logical channel, the resource may be sequentially allocated to the latency-sensitive data of the corresponding logical channel based on the sorting result or the priority of the logical channel. Therefore, in a scenario of allocating the resource to the logical channel, the data volume of the latency-sensitive data needs to be considered. The second device may properly allocate the resource to the logical channel based on this information. For example, when a logical channel with the highest priority has latency-sensitive data of x kilobits (kilobits, kbits) to be transmitted, y resource blocks may be first allocated to the logical channel with the highest priority to transmit the corresponding latency-sensitive data. When the resource is not filled up, the resource may be sequentially allocated to non-latency-sensitive data of the corresponding logical channel based on the sorting result or the priority of the logical channel.

In some possible implementations, during data transmission, a token bucket algorithm (token bucket algorithm) may be used. A working process of the token bucket algorithm may be that the second device (for example, a terminal like a host) maintains one token bucket, and injects tokens into the token bucket at a rate R. When sending data to the network side, the second device may first determine whether there is a token in the token bucket. If there is a token in the token bucket, the second device may send the data, and a volume of the sent data may be positively correlated to a quantity of tokens extracted from the token bucket. If the token bucket is empty, the second device cannot send the data to the network side, and all data packets (packets) may be buffered in a queue of the second device.

Although the token bucket limits a long-term rate of a data flow, a short-term data burst (burst) is allowed. Based on this, a token bucket size may be further set based on the data volume of the latency-sensitive data in the logical channel, and the data is transmitted with reference to the token bucket size, to deal with the short-term data burst. Descriptions are provided below by using an example in which data transmission is performed with reference to the token bucket size.

FIG. 5 is a schematic diagram of data transmission. The following steps are specifically included.

S502: Set the token bucket size based on the data volume of the latency-sensitive data in the logical channel.

A token bucket size of a $j^{th}$ logical channel may be denoted as $B_j$. In other words, the token bucket at most has $B_j$ tokens. For the $j^{th}$ logical channel, the second device may gradually adjust $B_j$. An adjustment amplitude may be $PBR \times T$, where $PBR$ represents a prioritized bit rate (priority bit rate, PBR), and $T$ represents an adjustment time interval. When a value of the adjusted $B_j$ is greater than a first data volume, the first data volume may be determined based on the prioritized bit rate PBR and a bucket size duration (Bucket Size Duration, BSD), for example, may be $PBR \times BSD$. $B_j$ may be set as the first data volume, for example, is $PBR \times BSD$.

Considering a case of the data burst (a burst data flow), the token bucket size $B_j$ may alternatively be set with reference to the data volume of the latency-sensitive data. Specifically, when the data volume of the latency-sensitive data is greater than the first data volume, the token bucket size may be set to the data volume of the latency-sensitive data. When the data volume of the latency-sensitive data is less than the first data volume, the token bucket size may be set to the first data volume.

In other words, $B_j$ may be set to a maximum value between the first data volume and the data volume of the latency-sensitive data. When the data volume of the latency-sensitive data is greater than the first data volume, if the value of $B_j$ is greater than the data volume of the latency-sensitive data, $B_j$ is set as the data volume of the latency-sensitive data. When the data volume of the latency-sensitive data is less than or equal to the first data volume, if the value of $B_j$ is greater than the first data volume, $B_j$ is set as the first data volume.

S504: Transmit the data in the logical channel or allocate the resource to the logical channel based on the sorting result or the priority of the logical channel and with reference to the token bucket size.

Specifically, a token bucket size is set for each piece of logical information. A corresponding volume of data may be filled into the specified resource of the uplink grant based on a token bucket size of a logical channel whose sorting result is close to the front or whose priority is high, to perform data transmission by using the resource.

When the data in the logical channel includes the latency-sensitive data, the latency-sensitive data may be preferentially filled into the resource specified by the uplink grant. When the data volume of the latency-sensitive data in the logical channel is less than the token bucket size, non-latency-sensitive data may continue to be used for filling until a volume of the data in the logical channel filled into the resource reaches the token bucket size of the logical channel.

In this embodiment, the data in the logical channel is transmitted or the resource is allocated to the logical channel based on the sorting result or the priorities of the logical channels and with reference to the token bucket size or the data volume of the latency-sensitive data. In this way, it can be ensured that the latency-sensitive data can be preferentially transmitted, or the resource can be preferentially allocated to the logical channel in which the latency-sensitive data is located.

In some possible implementations, indication information of the foregoing mechanism may be further configured on the network side, and the second device, for example, the UE, may enable the foregoing mechanism (a mechanism for obtaining the sorting result or the priority of the logical channel based on the remaining latency, or a mechanism for setting the token bucket size based on the data volume of the latency-sensitive data) based on the indication information of the foregoing mechanism.

First, FIG. 6 is a flowchart of a communication method. The following steps are specifically included.

S602: Obtain first indication information.

The first indication information indicates to obtain the sorting result or the priority of the logical channel based on the remaining durations of the logical channel. The first indication information may be configured by the first device. It should be noted that the first indication information may be configured in a plurality of manners, which are separately described in detail below.

When obtaining the first indication information, the second device may obtain the sorting result or the priority of the logical channel based on the remaining duration of the logical channel. When the first indication information is not configured or is released, the second device cannot obtain the sorting result or the priority of the logical channel based on the remaining duration of the logical channel. The second device may obtain the sorting result or the priority of the logical channel based on a logical channel priority configured by the first device.

In a first possible manner, the first indication information includes a first enable indication, where the first enable indication is used to enable obtaining of the sorting result or the priority of the logical channel based on the remaining duration of the logical channel. For example, the first indication information may include a first field. When a value of the first field is true, the first indication information includes the first enable indication, where the first enable indication is used to enable a mechanism for obtaining the sorting result or the priority of the logical channel based on the remaining duration of the logical channel.

In a second possible implementation, the first indication information may include an adjustment parameter configured on the network side, where the adjustment parameter may be a constant (for example, the first value), or may be related to the remaining duration. When the adjustment parameter is related to the remaining duration, the adjustment parameter may be represented by using a function expression. In this implementation, the adjustment parameter further has a function of indicating to obtain the sorting result or the priority of the logical channel based on the remaining duration of the logical channel.

In a third possible implementation, the first indication information may include an adjustment parameter and first information of a first logical channel that are configured on the network side. The adjustment parameter is a constant or is related to the remaining duration. The first information indicates that the first logical channel is a channel whose sorting result or priority can be obtained based on the remaining duration. A remaining logical channel (if any) may be referred to as a common logical channel. In this implementation, the adjustment parameter and the first information of the first logical channel further have a function of indicating to obtain the sorting result or the priority of the logical channel based on the remaining duration of the logical channel.

The first information includes a bit of the first logical channel. When the bit of the first logical channel is set to the first value, the first logical channel is a channel whose sorting result or priority can be obtained based on the remaining duration. When the bit of the first logical channel is set to the second value, the first logical channel is a channel whose sorting result or priority cannot be obtained based on the remaining duration. Alternatively, the first information is an identifier of the first logical channel. Alternatively, the first information is an indication bit, and the first information corresponds to the first logical channel. When the indication bit is true or enable, the first logical channel is a channel whose sorting result or priority can be obtained based on the remaining duration. When the indication bit is false or disable, the first logical channel is a channel whose sorting result or priority cannot be obtained based on the remaining duration.

In a fourth possible implementation, the first indication information may include first information of a first logical channel configured on the network side. The first information indicates that the first logical channel is a channel whose sorting result or priority can be obtained based on the remaining duration. In this implementation, the first information of the first logical channel further has a function of indicating to obtain the sorting result or the priority of the logical channel based on the remaining duration of the logical channel.

S604: Obtain the sorting result or the priority of the logical channel based on the remaining duration of the logical channel.

In some possible implementations, when there is the first logical channel whose sorting result or priority can be obtained based on the remaining duration and a common logical channel, for the first logical channel, the sorting result or the priority of the logical channel may be obtained based on the remaining duration of the first logical channel, and for the common logical channel, a priority keeps unchanged, and is still a priority configured on the network side.

In some other possible implementations, when there is the first logical channel whose sorting result or priority can be obtained based on the remaining duration and a common logical channel, for the first logical channel, the sorting result or the priority of the logical channel may be obtained based on the remaining duration of the first logical channel, and for the common logical channel, the common logical channel is sorted behind the first logical channel.

S606: Transmit the data in the logical channel or allocate the resource to the logical channel based on the sorting result or the priority of the logical channel.

For specific implementations of S604 and S606, refer to descriptions of the foregoing related content. Details are not described herein again.

It should be noted that, that the second device obtains the first indication information indicates that the second device may trigger the mechanism for "obtaining the sorting result or the priority of the logical channel based on the remaining duration of the logical channel", and does not indicate that the second device obtains the sorting result or the priority of the logical channel based on the remaining duration of the logical channel when obtaining the first indication information. During actual application, when receiving the first indication information, the second device may obtain the sorting result or the priority of the logical channel based on the remaining duration of the logical channel when obtaining the uplink grant. Before releasing the first indication information, if obtaining the uplink grant for a plurality of times, the second device may obtain the sorting result or the priority of the logical channel based on the remaining duration of the logical channel each time obtaining the uplink grant.

For example, when the second device does not obtain the uplink grant, or does not perform an LCP process, a priority of each logical channel of the second device may be kept as a priority configured on the network side by using the RRC message. However, when the second device performs the LCP process, if receiving the first indication information, or not releasing first indication information previously received, the second device may temporarily adjust the priority of the logical channel based on the remaining duration.

In a case, the first indication information may be for one-off application, and indicates that a latency-based LCP process may be applied to only the first time of sorting after the first indication information is received. In a case, the first indication information may be applied to a duration, where the duration may be implemented by using a timer. For example, the timer is started after the first indication information is received, or the timer is started after the uplink grant is obtained after the first indication information is received. A duration of the timer may be configured on the network side. In a case, the first indication information may be applied to a data transmission object. When it is determined that the data transmission object needs to be used for data transmission, the latency-based LCP process is applied. In a case, the first indication information is applied to a first resource (the uplink grant). When data needs to be transmitted on the first resource, the latency-based LCP process is applied. The latency-based LCP process refers to a process of setting the token bucket size or a process of sorting the data transmission object based on the latency information in the present invention.

In addition, FIG. 7 is a flowchart of a communication method. The method includes the following steps.

S702: Obtain second indication information.

The second indication information indicates to set the token bucket size based on the data volume of the latency-sensitive data in the logical channel. The second indication information may be configured by the first device. It should be noted that the second indication information may be configured in a plurality of manners, which are separately described in detail below.

When the second device obtains the second indication information, the token bucket size may be set based on the data volume of the latency-sensitive data in the logical channel. When the second indication information is not configured or is released, the second device cannot set the token bucket size based on the data volume of the latency-sensitive data in the logical channel. The second device may set the token bucket size based on the prioritized bit rate PBR and the bucket size duration BSD.

In a first possible manner, the second indication information includes a second enable indication, where the second enable indication is used to enable setting of the token bucket size based on the data volume of the latency-sensitive data in the logical channel. For example, the second indication information may include a second field. When a value of the second field is true, the second indication information includes the second enable indication, where the second enable indication indicates to set the token bucket size based on the data volume of the latency-sensitive data in the logical channel.

In a second possible manner, the second indication information includes a first data volume configured on the network side. The first data volume is determined based on the prioritized bit rate PBR and the bucket size duration BSD, and may be, for example, $PBR \times BSD$. In this implementation, the first data volume further has a function of indicating to set the token bucket size based on the data volume of the latency-sensitive data in the logical channel.

In a third possible manner, the second indication information includes a first data volume and second information of a second logical channel that are configured on the network side. The second information indicates that the second logical channel is a channel whose token bucket size can be set based on the data volume of the latency-sensitive data. In this implementation, the first data volume and the second information of the second logical channel further have a function of indicating to set the token bucket size based on the data volume of the latency-sensitive data in the logical channel.

The second information includes a bit of the second logical channel. When the bit of the second logical channel is set to the first value, the second logical channel is a channel whose token bucket size can be set based on the data volume of the latency-sensitive data. When the bit of the second logical channel is set to the second value, the second logical channel is a channel whose token bucket size cannot be set based on the data volume of the latency-sensitive data. Alternatively, the second information is an identifier of the second logical channel. Alternatively, the second information is an indication bit, and the second information corresponds to the second logical channel. When the indication bit is true or enable, the second logical channel is a channel whose token bucket size can be set based on the data volume of the latency-sensitive data. When the indication bit is false or disable, the second logical channel is a channel whose token bucket size cannot be set based on the data volume of the latency-sensitive data.

In a fourth possible manner, the second indication information includes second information of a second logical channel configured on the network side. The second information indicates that the second logical channel is a channel whose token bucket size can be set based on the data volume of the latency-sensitive data. In this implementation, the second information of the second logical channel further has a function of indicating to set the token bucket size based on the data volume of the latency-sensitive data in the logical channel.

S704: Set the token bucket size based on the data volume of the latency-sensitive data in the logical channel.

For setting the token bucket size based on the data volume of the latency-sensitive data in the logical channel, refer to the foregoing descriptions of related content. Details are not described herein again.

Similar to the embodiment of FIG. 6, that the second device obtains the second indication information indicates that the second device may trigger a mechanism for "setting the token bucket size based on the data volume of the latency-sensitive data in the logical channel", and does not indicate that the second device sets the token bucket size based on the data volume of the latency-sensitive data in the logical channel when obtaining the second indication information. During actual application, when receiving the second indication information, the second device may set the token bucket size based on the data volume of the latency-sensitive data in the logical channel when obtaining the uplink grant. Before releasing the second indication information, if obtaining the uplink grant for a plurality of times, the second device may set the token bucket size based on the data volume of the latency-sensitive data in the logical channel each time obtaining the uplink grant.

For example, when the second device does not obtain the uplink grant, or does not perform an LCP process, a token bucket size of each logical channel of the second device may be kept as $PBR \times BSD$. However, when the second device performs the LCP process, if receiving the second indication information, or not releasing second indication information previously received, the second device may temporarily adjust the token bucket size of the logical channel to the data volume of the latency-sensitive data when the data volume of the latency-sensitive data is greater than $PBR \times BSD$.

In a case, the second indication information may be for one-off application, and indicates that a latency-based LCP process may be applied to only the first time of sorting after the second indication information is received. In a case, the second indication information may be applied to a duration, where the duration may be implemented by using a timer. For example, the timer is started after the second indication information is received, or the timer is started after the uplink grant is obtained after the second indication information is received. A duration of the timer may be configured on the network side. In a case, the second indication information may be applied to a data transmission object. When it is determined that the data transmission object needs to be used for data transmission, the latency-based LCP process is applied. In a case, the second indication information is applied to a first resource (the uplink grant). When data needs to be transmitted on the first resource, the latency-based LCP process is applied.

The communication method in this application is described in the foregoing embodiments from the perspective of the second device. The following describes the communication method in this application from the perspective of the first device.

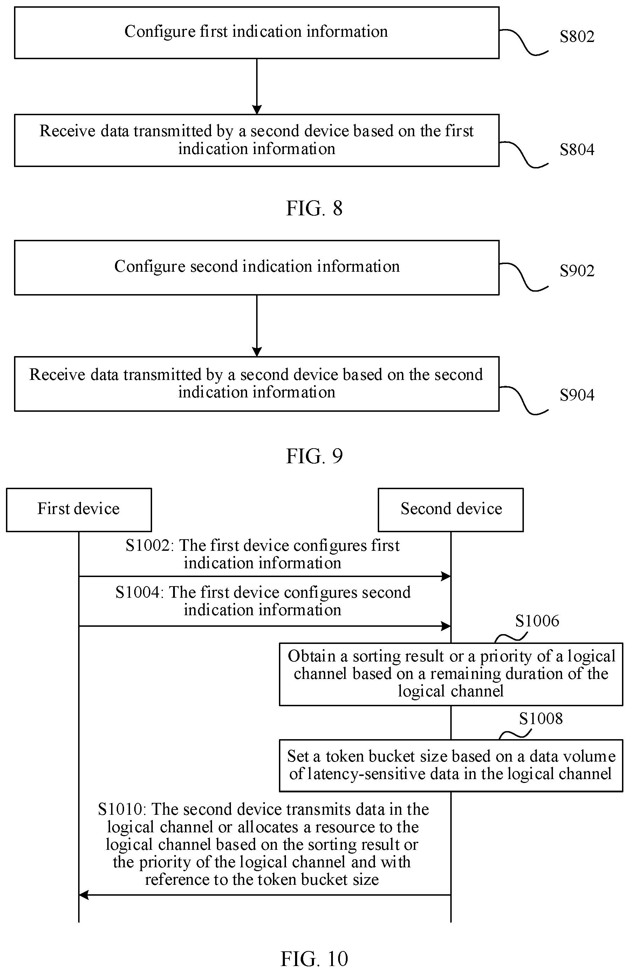

FIG. 8 is a flowchart of a communication method. The method includes the following steps.

S802: Configure first indication information.

Specifically, the first device may configure the first indication information. The first indication information indicates to obtain a logical channel or a priority of a sorting result of the logical channel based on a remaining duration of the logical channel. The first indication information may be device-level or channel-level indication information. The device-level indication information may indicate that a mechanism for obtaining the logical channel or the priority of the sorting result of the logical channel based on the remaining duration of the logical channel is enabled for each logical channel of a second device. The channel-level indication information may indicate that a mechanism for obtaining the logical channel or the priority of the sorting result of the logical channel based on the remaining duration of the logical channel is enabled for a specific logical channel.

Configuring the first indication information may include a plurality of implementations, which are separately described below.

In a first possible implementation, the first device may configure a first enable indication. The first enable indication is used to enable obtaining of the sorting result or the priority of the logical channel based on the remaining duration of the logical channel. For example, the first indication information includes a first field, and the first device configures a field value of the first field as true, to indicate to enable the mechanism for obtaining the sorting result or the priority of the logical channel based on the remaining duration of the logical channel.

In a second possible implementation, the first device may configure an adjustment parameter. The adjustment parameter is a constant or is related to the remaining duration. When the adjustment parameter is related to the remaining duration, the adjustment parameter may be represented by using a function expression. In this implementation, the adjustment parameter further has a function of indicating to obtain the sorting result or the priority of the logical channel based on the remaining duration of the logical channel. In other words, the adjustment parameter may be reused as the first enable indication.

In a third possible implementation, the first device may configure an adjustment parameter and first information of a first logical channel. The first information indicates that the first logical channel is a channel whose sorting result or priority can be obtained based on the remaining duration. In this implementation, the adjustment parameter and the first information of the first logical channel further have a function of indicating to obtain the sorting result or the priority of the logical channel based on the remaining duration of the logical channel. In other words, the adjustment parameter and an identifier of the first logical channel may be reused as the first enable indication.

In a fourth possible implementation, the first device may configure first information of a first logical channel. The first information indicates that the first logical channel is a channel whose sorting result or priority can be obtained based on the remaining duration. In this implementation, the first information of the first logical channel further has a function of indicating to obtain the sorting result or the priority of the logical channel based on the remaining duration of the logical channel. In other words, the first information of the first logical channel may be reused as the first enable indication.

S804: Receive data transmitted by the second device based on the first indication information.

For a data transmission process, refer to descriptions of the foregoing content. Details are not described herein again.

It should be noted that S804 is an optional step in this embodiment of this application. S804 may alternatively not be performed when the communication method in this application is performed. For example, when the logical channel does not include data, S804 may not be performed.

FIG. 9 is a flowchart of a communication method. The method includes the following steps.

S902: Configure second indication information.

Specifically, a first device may configure the second indication information. The second indication information indicates to set a token bucket size based on a data volume of latency-sensitive data in a logical channel. The second indication information may be device-level or channel-level indication information. The device-level indication information may indicate that a mechanism for setting the token bucket size based on the data volume of the latency-sensitive data in the logical channel is enabled for each logical channel of a second device. The channel-level indication information may indicate that a mechanism for setting the token bucket size based on the data volume of the latency-sensitive data in the logical channel is enabled for a specific logical channel.

Configuring the second indication information may include a plurality of implementations, which are separately described below.

In a first possible implementation, the first device may configure a second enable indication. The second enable indication is used to enable setting of the token bucket size based on the data volume of the latency-sensitive data in the logical channel. For example, the second indication information includes a second field, and the first device configures a field value of the second field as true, to indicate to enable the mechanism for setting the token bucket size based on the data volume of the latency-sensitive data in the logical channel.

In a second possible implementation, the first device may configure a first data volume. The first data volume may be determined based on a PBR and a BSD, for example, may be $PBR \times BSD$. In this implementation, the first data volume further has a function of indicating to set the token bucket size based on the data volume of the latency-sensitive data in the logical channel. In other words, the first data volume may be reused as the second enable indication.

In a third possible implementation, the first device may configure a first data volume and second information of a second logical channel. The second information indicates that the second logical channel is a channel whose token bucket size can be set based on the data volume of the latency-sensitive data in the logical channel. In this implementation, the first data volume and the second information of the second logical channel further have a function of indicating to set the token bucket size based on the data volume of the latency-sensitive data in the logical channel. In other words, the first data volume and the second information of the second logical channel may be reused as the second enable indication.

In a fourth possible implementation, the first device may configure second information of a second logical channel. The second information indicates that the second logical channel is a channel whose token bucket size can be set based on the data volume of the latency-sensitive data in the logical channel. In this implementation, the second information of the second logical channel further has a function of indicating to set the token bucket size based on the data volume of the latency-sensitive data in the logical channel. In other words, the second information of the second logical channel may be reused as the second enable indication.

S904: Receive data transmitted by the second device based on the second indication information.

For a data transmission process, refer to descriptions of the foregoing content. Details are not described herein again.

It should be noted that S904 is an optional step in this embodiment of this application. S904 may alternatively not be performed when the communication method in this application is performed. For example, the token bucket size of the logical channel may be set as $PBR \times BSD$.

The communication method in this application is described above from the perspectives of the terminal and the network side respectively. The following describes the communication method in this application from a perspective of interaction.

FIG. 10 is a flowchart of a communication method. The following steps are included.

S1002: A first device configures first indication information.

S1004: The first device configures second indication information.

S1002 and S1004 may be performed concurrently, or may be performed sequentially. The first indication information and the second indication information may be independent indication information, or may be combined into one piece of indication information.

S1006: A second device obtains a sorting result or a priority of a logical channel based on a remaining duration of the logical channel.

S1008: The second device sets a token bucket size based on a data volume of latency-sensitive data in the logical channel.

S1010: The second device transmits data in the logical channel or allocates a resource to the logical channel based on the sorting result or the priority of the logical channel and with reference to the token bucket size.

For specific implementations of S1002 to S1010, refer to descriptions of related content in the foregoing embodiments. Details are not described one by one herein again.

The present invention further provides a method. When obtaining data transmission object information, a terminal device preferentially allocates a resource to a data transmission object indicated by the data transmission object information. In a case, a resource may be allocated based on data volume information of a multimodal service, and after the resource is allocated to these data transmission objects, information other than the data transmission object indicated by the data transmission object information is transmitted. These data transmission objects belong to one multimodal service.

The data transmission object information includes a bit of the data transmission object. When the bit of the data transmission object is set to a first value, the resource may be preferentially allocated to the data transmission object. When the bit of the data transmission object is set to a second value, the resource cannot be preferentially allocated to the data transmission object. Alternatively, the first information is an identifier of the data transmission object. Alternatively, the data transmission object information is an indication bit, and the data transmission object information corresponds to the data transmission object. When the indication bit is true or enable, the resource may be preferentially allocated to the data transmission object. When the indication bit is false or disable, the resource cannot be preferentially allocated to the data transmission object.

The foregoing method may be used in combination with the method in the present invention. For example, the resource is allocated to the data transmission object based on latency information and a data volume of a multimodal service or a total data volume of the data transmission object indicated by the data transmission object information.

Based on the foregoing communication method, this application further provides an electronic device configured to perform the foregoing communication method. The following provides descriptions with reference to embodiments.

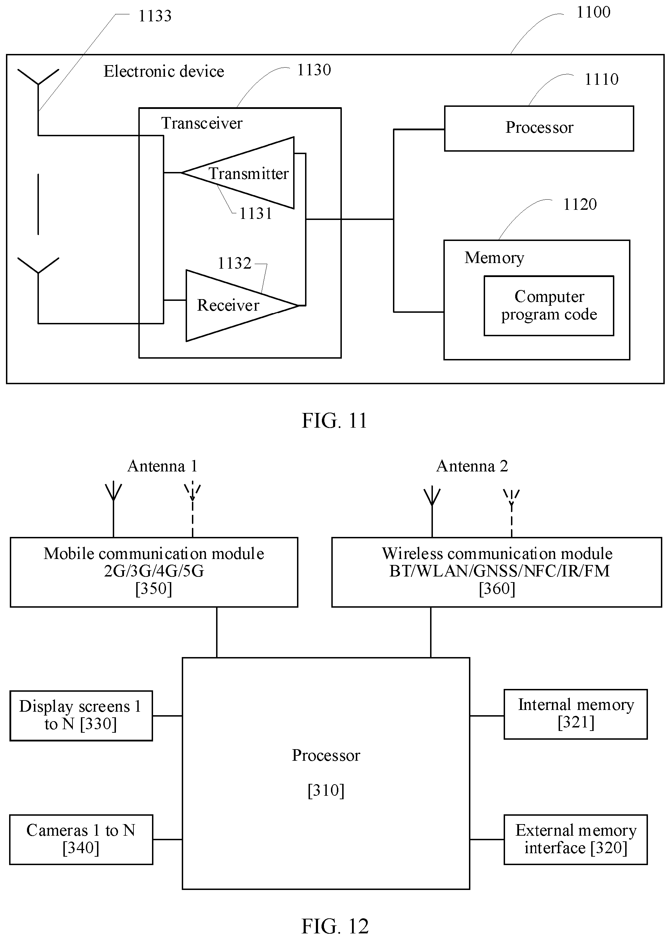

FIG. 11 shows an example of composition of an electronic device according to an embodiment of this application. The electronic device may be a first device, including but not limited to a base station and a core network unit. FIG. 11 is a diagram of a simplified structure of a base station. The base station includes a part 1110, a part 1120, and a part 1130. The part 1110 is mainly configured to: perform baseband processing, control the base station, and the like. The part 1110 is usually a control center of the base station, may be usually referred to as a processor, and is configured to control the base station to perform a processing operation on a side of the first device in the foregoing method embodiments. The part 1120 is mainly configured to store computer program code and data. The part 1130 is mainly configured to receive and send a radio frequency signal, and perform conversion between the radio frequency signal and a baseband signal. The part 1130 may be usually referred to as a transceiver module, a transceiver machine, a transceiver circuit, a transceiver, or the like. The transceiver module in the part 1130 may also be referred to as a transceiver machine, a transceiver, or the like. The transceiver module includes an antenna 1133 and a radio frequency circuit (not shown in the figure). The radio frequency circuit is mainly configured to perform radio frequency processing. Optionally, in the part 1130, a component configured to implement a receiving function may be considered as a receiver, and a component configured to implement a sending function may be considered as a transmitter. That is, the part 1130 includes a receiver 1132 and a transmitter 1131. The receiver may also be referred to as a receiving module, a receiver machine, a receiving circuit, or the like. The transmitter may be referred to as a transmitting module, a transmitter machine, a transmitting circuit, or the like.

The part 1110 and the part 1120 may include one or more boards. Each board may include one or more processors and one or more memories. The processor is configured to read and execute a program in the memory to implement a baseband processing function and control the base station. If a plurality of boards exist, the boards may be interconnected to enhance a processing capability. In an optional implementation, the plurality of boards may alternatively share one or more processors, or the plurality of boards share one or more memories, or the plurality of boards simultaneously share one or more processors.

For example, in an implementation, the transceiver module in the part 1130 is configured to perform a process related to receiving and sending performed by the base station (the first device) in the foregoing method embodiments. The processor in the part 1110 is configured to perform a process related to processing performed by the base station in the foregoing method embodiments.

It should be understood that FIG. 11 is merely an example rather than a limitation, and a network device including the processor, the memory, and the transceiver may not depend on the structure shown in FIG. 11.

FIG. 12 shows an example of composition of another electronic device according to an embodiment of this application. The electronic device may be a second device. The second device may be a terminal, including but not limited to an electronic device like a mobile phone or an intelligent wearable device (for example, a smartwatch). The mobile phone is used as an example below. The electronic device may include a processor 310, an external memory interface 320, an internal memory 321, a display screen 330, a camera 340, an antenna 1, an antenna 2, a mobile communication module 350, a wireless communication module 360, and the like.

It may be understood that the structure shown in this embodiment constitutes no specific limitation on the electronic device. In some other embodiments, the electronic device may include more or fewer components than those shown in the figure, some components may be combined, some components may be split, or a different component deployment may be used. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

It may be understood that an interface connection relationship between modules shown in this embodiment is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The external memory interface 320 may be configured to be connected to an external memory card, for example, a Micro SD card, to expand a storage capability of the electronic device. The external memory card communicates with the processor 310 through the external memory interface 320, to implement a data storage function. For example, files such as music and videos are stored in the external memory card.

The internal memory 321 may be configured to store computer-executable program code. The executable program code includes instructions. The processor 310 runs the instructions stored in the internal memory 321, to perform various function applications and data processing of the electronic device. The internal memory 321 may include a program storage area and a data storage area. The program storage area may store an operating system, an application required by at least one function (for example, a sound playing function and an image playing function), and the like. The data storage area may store data (for example, audio data and an address book) and the like created when the electronic device is used. In addition, the internal memory 321 may include a high-speed random access memory, and may further include a non-volatile memory, for example, at least one magnetic disk storage device, a flash memory device, or a universal flash storage (universal flash storage, UFS). The processor 310 runs the instructions stored in the internal memory 321 and/or the instructions stored in the memory disposed in the processor, to implement various function applications and data processing of the electronic device.

A wireless communication function of the electronic device may be implemented through the antenna 1, the antenna 2, the mobile communication module 350, the wireless communication module 360, the modem processor, the baseband processor, or the like.

The antenna 1 and the antenna 2 are configured to transmit and receive an electromagnetic wave signal. Each antenna in the electronic device may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 350 may provide a solution applied to the electronic device for wireless communication including 2G/3G/4G/5G and the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit the processed electromagnetic wave to the modem processor for demodulation. The mobile communication module 350 may further amplify a signal modulated by the modem processor, and convert, through the antenna 1, an amplified signal into an electromagnetic wave for radiation. In some embodiments, at least some functional modules of the mobile communication module 350 may be disposed in the processor 310. In some embodiments, the at least some functional modules of the mobile communication module 350 and at least some modules of the processor 310 may be disposed in a same component.

In some embodiments, the electronic device initiates or receives a call request by using the mobile communication module 350 and the antenna 1.

In addition, an operating system runs on the foregoing components, for example, an iOS operating system, an Android operating system, or a Windows operating system. An application may be installed and run in the operating system. It may be clearly understood by a person skilled in the art that, for convenient and brief description, for explanations and beneficial effects of related content in any one of the electronic devices provided above, refer to the corresponding method embodiment provided above. Details are not described herein again.

This application further provides a communication system. The communication system may include the first device (for example, a network device like a base station) shown in FIG. 11 and the second device (for example, a terminal like a mobile phone) shown in FIG. 12.

In this application, the terminal or the network device may include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, text processing software, and instant messaging software.

It may be clearly understood by a person skilled in the art that, for convenient and brief description, for a detailed working process of the system, device, and module described above, refer to a corresponding process in the foregoing method embodiments. Details are not described herein again.

In the several embodiments provided in this application, it should be understood that the disclosed system, device, and method may be implemented in another manner. For example, the device embodiments described above are merely examples. For example, division into the modules is merely logical function division. During actual implementation, there may be another division manner. For example, a plurality of modules or components may be combined or may be integrated into another system, or some features may be ignored or not performed. In addition, the displayed or discussed mutual couplings or direct couplings or communication connections may be implemented by using some interfaces. The indirect couplings or communication connections between the systems or modules may be implemented in an electronic form, a mechanical form, or another form.

The modules described as separate parts may or may not be physically separate, and parts displayed as modules may or may not be physical modules, may be located in one place, or may be distributed on a plurality of network modules. Some or all of the modules may be selected according to actual needs to achieve the objectives of the solutions of embodiments.

In addition, functional modules in embodiments of this application may be integrated into one processing module, or each module may exist alone physically, or two or more modules may be integrated into one module. The integrated module may be implemented in a form of hardware, or may be implemented in a form of a software functional module.

When the integrated module is implemented in the form of the software functional module and sold or used as an independent product, the integrated module may be stored in a computer-readable storage medium. Based on such an understanding, the part of the technical solutions of this application essentially making a contribution, or all or a part of the technical solutions may be implemented in a form of a software product. The computer software product is stored in a storage medium, and includes several instructions for instructing a computer device (which may be a personal computer, a server, a network device, or the like) to perform all or a part of the processes of the methods described in embodiments of this application. The storage medium includes various media that can store program code, for example, a USB flash drive, a removable hard disk, a read-only memory, a random access memory, a magnetic disk, or an optical disc.

The foregoing embodiments are merely intended to describe the technical solutions of this application, but not to limit this application. Although this application is described in detail with reference to the foregoing embodiments, a person of ordinary skill in the art should understand that modifications may still be made to the technical solutions recorded in the foregoing embodiments or equivalent replacements may still be made to some technical features thereof, without departing from the scope of the technical solutions of embodiments of this application.

**Claims**

1. A communication method, wherein the method comprises:

   obtaining a sorting result or a priority of a data transmission object based on a remaining duration of the data transmission object; and
   transmitting data in the data transmission object or allocating a resource to the data transmission object based on the sorting result or the priority of the data transmission object.

2. The method according to claim 1, wherein the method further comprises:

   obtaining a first priority of the data transmission object; and
   the obtaining a priority of a data transmission object based on a remaining duration of the data transmission object comprises:
   determining a second priority of the data transmission object based on the remaining duration and the first priority of the data transmission object.

3. The method according to claim 2, wherein the determining a second priority of the data transmission object based on the remaining duration and the first priority of the data transmission object comprises:
   adjusting the first priority of the data transmission object based on an adjustment parameter, to obtain the second priority of the data transmission object.

4. The method according to claim 3, wherein the adjusting the first priority of the data transmission object based on an adjustment parameter, to obtain the second priority of the data transmission object comprises:

   adjusting, when the remaining duration of the data transmission object satisfies a first condition, the first priority of the data transmission object based on a first value or an adjustment parameter related to the remaining duration, to obtain the second priority of the data transmission object; or
   adjusting the first priority of the data transmission object based on an adjustment parameter related to the remaining duration, to obtain the second priority of the data transmission object; or
   adjusting, when the remaining duration of the data transmission object satisfies a first condition, the first priority based on a first value or a first adjustment parameter related to the remaining duration, to obtain the second priority of the data transmission object, and adjusting, when the remaining duration of the data transmission object satisfies a second condition, the first priority based on a second value or a second adjustment parameter related to the remaining duration, to obtain the second priority of the data transmission object.

5. The method according to claim 3 or 4, wherein the adjusting the first priority of the data transmission object based on an adjustment parameter, to obtain the second priority of the data transmission object comprises:
   performing an arithmetic operation on the first priority based on the adjustment parameter, to obtain the second priority of the data transmission object.

6. The method according to claim 1, wherein the obtaining a sorting result of a data transmission object based on a remaining duration of the data transmission object comprises:

   obtaining the priority of the data transmission object based on the remaining duration of the data transmission object, and sorting the data transmission object based on the priority of the data transmission object, to obtain the sorting result of the data transmission object; or
   sorting the data transmission object based on the remaining duration of the data transmission object, to obtain the sorting result of the data transmission object; or

when the remaining duration of the data transmission object satisfies a first condition, performing sorting based on the remaining duration of the data transmission object, to obtain the sorting result of the data transmission object, and when the remaining duration of the data transmission object satisfies a second condition, performing sorting based on the priority of the data transmission object, to obtain the sorting result of the data transmission object.

7. The method according to any one of claims 1 to 6, wherein the allocating a resource to the data transmission object based on the sorting result or the priority of the data transmission object comprises:

obtaining a data volume of latency-sensitive data in the data transmission object; and
allocating the resource to the data transmission object based on the sorting result or the priority of the data transmission object and the data volume of the latency-sensitive data in the data transmission object.

8. The method according to any one of claims 1 to 7, wherein the method further comprises:

setting a token bucket size based on the data volume of the latency-sensitive data in the data transmission object; and
the transmitting data in the data transmission object based on the sorting result or the priority of the data transmission object comprises:
transmitting the data in the data transmission object based on the sorting result or the priority of the data transmission object and with reference to the token bucket size.

9. The method according to claim 8, wherein the setting a token bucket size based on the data volume of the latency-sensitive data in the data transmission object comprises:

setting the token bucket size to the data volume of the latency-sensitive data when the data volume of the latency-sensitive data is greater than a first data volume, wherein the first data volume is determined based on a prioritized bit rate PBR and a bucket size duration BSD; or
setting the token bucket size to the first data volume when the data volume of the latency-sensitive data is less than the first data volume.

10. The method according to any one of claims 1 to 9, wherein the method further comprises:
obtaining first indication information, wherein the first indication information indicates to obtain the sorting result or the priority of the data transmission object based on the remaining duration of the data transmission object.

11. The method according to claim 10, wherein the obtaining first indication information comprises:

obtaining a first enable indication, wherein the first enable indication is used to enable obtaining of the sorting result or the priority of the data transmission object based on the remaining duration of the data transmission object; or
obtaining an adjustment parameter configured on a network side, wherein the adjustment parameter is a constant or is related to the remaining duration; or
obtaining an adjustment parameter and first information of a first data transmission object that are configured on a network side, wherein the adjustment parameter is a constant or is related to the remaining duration, and the first information indicates that the first data transmission object is an object whose sorting result or priority can be obtained based on the remaining duration; or
obtaining first information of a first data transmission object configured on a network side, wherein the first information indicates that the first data transmission object is an object whose sorting result or priority can be obtained based on the remaining duration.

12. The method according to any one of claims 1 to 11, wherein the method further comprises:
obtaining second indication information, wherein the second indication information indicates to set the token bucket size based on the data volume of the latency-sensitive data in the data transmission object.

13. The method according to claim 12, wherein the obtaining second indication information comprises:

obtaining a second enable indication, wherein the second enable indication is used to enable setting of the token bucket size based on the data volume of the latency-sensitive data in the data transmission object; or
obtaining a first data volume configured on the network side, wherein the first data volume is determined based on the prioritized bit rate PBR and the bucket size duration BSD; or
obtaining a first data volume and second information of a second data transmission object that are configured on the network side, wherein the second information indicates that the second data transmission object is an object whose token bucket size can be set based on the data volume of the latency-sensitive data; or
obtaining second information of a second data transmission object configured on the network side, wherein the second information indicates that the second data transmission object is an object whose token bucket size can be set based on the data volume of the latency-sensitive data.

14. The method according to any one of claims 1 to 13, wherein the data transmission object comprises one or more of a logical channel, a logical channel group, a protocol data unit PDU set, or a data packet.

15. The method according to any one of claims 1 to 14, wherein the remaining duration comprises shortest remaining time of a data packet in the data transmission object.

16. A communication method, wherein the method comprises:
configuring first indication information, wherein the first indication information indicates to obtain a data transmission object or a priority of a sorting result of a data transmission object based on a remaining duration of the data transmission object.

17. The method according to claim 16, wherein the configuring first indication information comprises:

configuring a first enable indication, wherein the first enable indication is used to enable obtaining of the sorting result or the priority of the data transmission object based on the remaining duration of the data transmission object; or
configuring an adjustment parameter, wherein the adjustment parameter is a constant or is related to the remaining duration; or
configuring an adjustment parameter and first information of a first data transmission object, wherein the first information indicates that the first data transmission object is an object whose sorting result or priority can be obtained based on the remaining duration; or
configuring first information of a first data transmission object, wherein the first information indicates that the first data transmission object is an object whose sorting result or priority can be obtained based on the remaining duration.

18. The method according to claim 16 or 17, wherein the remaining duration comprises shortest remaining time of a data packet in the data transmission object.

19. A communication method, wherein the method further comprises:
configuring second indication information, wherein the second indication information indicates to set a token bucket size based on a data volume of latency-sensitive data in a data transmission object.

20. The method according to claim 19, wherein the configuring second indication information comprises:

configuring a second enable indication, wherein the second enable indication is used to enable setting of the token bucket size based on the data volume of the latency-sensitive data in the data transmission object; or
configuring a first data volume, wherein the first data volume is determined based on a prioritized bit rate PBR and a bucket size duration BSD; or
configuring a first data volume and second information of a second data transmission object, wherein the second information indicates that the second data transmission object is an object whose token bucket size can be set based on the data volume of the latency-sensitive data in the data transmission object; or
configuring second information of a second data transmission object, wherein the second information indicates that the second data transmission object is an object whose token bucket size can be set based on the data volume of the latency-sensitive data in the data transmission object.

21. An electronic device, wherein the electronic device comprises:

a memory, configured to store a computer program or computer instructions; and
a processor, configured to execute the computer program or the computer instructions stored in the memory, to enable the electronic device to perform the method according to any one of claims 1 to 15.

22. An electronic device, wherein the electronic device comprises:

   a memory, configured to store a computer program or computer instructions; and
   a processor, configured to execute the computer program or the computer instructions stored in the memory, to enable the electronic device to perform the method according to any one of claims 16 to 20.

23. A communication system, wherein the system comprises a first device and a second device, the first device is configured to perform the method according to any one of claims 1 to 15, and the second device is configured to perform the method according to any one of claims 16 to 20.

24. A computer storage medium, configured to store a computer program, wherein when the computer program is executed, the method according to any one of claims 1 to 20 is implemented.

FIG. 1

| Obtain a sorting result or a priority of a logical channel based on a remaining duration of the logical channel | S202 |
|---|---|

| Transmit data in the logical channel or allocate a resource to the logical channel based on the sorting result or the priority of the logical channel | S204 |
|---|---|

FIG. 2

| Obtain an adjustment parameter | S302 |
|---|---|

| Adjust a first priority of a logical channel based on the adjustment parameter, to obtain a second priority of the logical channel | S304 |
|---|---|

FIG. 3

Obtain a data volume of latency-sensitive data in a logical channel — S402

Allocate a resource to the logical channel based on a sorting result or a priority of the logical channel and the data volume of the latency-sensitive data in the logical channel — S404

FIG. 4

Set a token bucket size based on a data volume of latency-sensitive data in a logical channel — S502

Transmit data in the logical channel or allocate a resource to the logical channel based on a sorting result or a priority of the logical channel and with reference to the token bucket size — S504

FIG. 5

Obtain first indication information — S602

Obtain a sorting result or a priority of a logical channel based on a remaining duration of the logical channel — S604

FIG. 6

Obtain second indication information — S702

Set a token bucket size based on a data volume of latency-sensitive data in a logical channel — S704

FIG. 7

Configure first indication information — S802

↓

Receive data transmitted by a second device based on the first indication information — S804

FIG. 8

Configure second indication information — S902

↓

Receive data transmitted by a second device based on the second indication information — S904

FIG. 9

First device              Second device

S1002: The first device configures first indication information

S1004: The first device configures second indication information

S1006

Obtain a sorting result or a priority of a logical channel based on a remaining duration of the logical channel

S1008

Set a token bucket size based on a data volume of latency-sensitive data in the logical channel

S1010: The second device transmits data in the logical channel or allocates a resource to the logical channel based on the sorting result or the priority of the logical channel and with reference to the token bucket size

FIG. 10

FIG. 11

FIG. 12

## INTERNATIONAL SEARCH REPORT

| International application No. |
|---|
| **PCT/CN2024/106945** |

| A. | CLASSIFICATION OF SUBJECT MATTER |
|---|---|

H04W 72/566(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, WPABSC, ENTXTC, ENTXT, VCN, VEN, CJFD: 数据, 传输对象/逻辑信道/协议数据单元/PDU/服务数据单元/ SDU, 剩余, 时长/时间, 排序/优先级, 时延/延时/延迟, 敏感, 量/个数/容量/大小, 令牌桶, data, logical channel, residue, time, prioritization, delay, sensitive, number/capacity, token bucket

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110167066 A (HUAWEI TECHNOLOGIES CO., LTD.) 23 August 2019 (2019-08-23) description, paragraphs 10, 12, 62-109, and 132-145 | 1-7, 10, 11, 14-18, 21-24 |
| Y | CN 110167066 A (HUAWEI TECHNOLOGIES CO., LTD.) 23 August 2019 (2019-08-23) description, paragraphs 10, 12, 62-109, and 132-145 | 8, 9, 12, 13 |
| X | CN 115038126 A (HUAWEI TECHNOLOGIES CO., LTD.) 09 September 2022 (2022-09-09) description, paragraphs 67 and 87-243 | 19, 20 |
| Y | CN 115038126 A (HUAWEI TECHNOLOGIES CO., LTD.) 09 September 2022 (2022-09-09) description, paragraphs 67 and 87-243 | 8, 9, 12, 13 |
| X | CN 108093485 A (HYTERA COMMUNICATIONS CORP., LTD.) 29 May 2018 (2018-05-29) claims 1-6 | 1, 16, 21-24 |
| X | WO 2021037332 A1 (NOKIA TECHNOLOGIES OY) 04 March 2021 (2021-03-04) description, paragraphs 7-16 | 1, 16, 21-24 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 August 2024** | **30 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 773 710 A1**

**INTERNATIONAL SEARCH REPORT**

<table>
<tr><td>International application No.<br><br>**PCT/CN2024/106945**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| A | CN 103945540 A (CHINA ACADEMY OF TELECOMMUNICATIONS TECHNOLOGY) 23 July 2014 (2014-07-23)<br>       entire document | 1-24 |
| A | CN 114449664 A (SHANGHAI QINGKUN INFORMATION TECHNOLOGY CO., LTD.) 06 May 2022 (2022-05-06)<br>       entire document | 1-24 |

Form PCT/ISA/210 (second sheet) (July 2022)

34

**INTERNATIONAL SEARCH REPORT**
**Information on patent family members**

International application No.

**PCT/CN2024/106945**

| Patent document cited in search report | | | Publication date (day/month/year) | Patent family member(s) | | | Publication date (day/month/year) |
|---|---|---|---|---|---|---|---|
| CN | 110167066 | A | 23 August 2019 | WO | 2019157969 | A1 | 22 August 2019 |
| CN | 115038126 | A | 09 September 2022 | | None | | |
| CN | 108093485 | A | 29 May 2018 | | None | | |
| WO | 2021037332 | A1 | 04 March 2021 | | None | | |
| CN | 103945540 | A | 23 July 2014 | | None | | |
| CN | 114449664 | A | 06 May 2022 | | None | | |

## REFERENCES CITED IN THE DESCRIPTION

**Patent documents cited in the description**

* CN 202311751405